(19) Europäisches Patentamt
European Patent Office
Office européen des brevets

(11) EP 1 707 462 B1

(12) EUROPEAN PATENT SPECIFICATION

(45) Date of publication and mention
of the grant of the patent:
**04.12.2013 Bulletin 2013/49**

(51) Int Cl.:
*B60T 7/04* (2006.01)　　*G05G 1/38* (2008.04)
*G05G 1/405* (2008.04)　　*G05G 5/03* (2008.04)
*B60W 50/08* (2012.01)　　*B60W 50/16* (2012.01)
*B60K 26/02* (2006.01)

(21) Application number: 06003414.7

(22) Date of filing: **20.02.2006**

(54) **Pedal system and vehicle system with the pedal system**

Pedalsystem für Kraftfahrzeug

Système de pédale pour véhicule automobile

(84) Designated Contracting States:
**DE**

(30) Priority:　**31.03.2005　JP 2005100537**

(43) Date of publication of application:
**04.10.2006　Bulletin 2006/40**

(73) Proprietor: **Hitachi, Ltd.**
**Tokyo (JP)**

(72) Inventors:
• **Ueno, Kentaro**
**Tokyo 100-8220 (JP)**

• **Sasaki, Mitsuhide**
**Tokyo 100-8220 (JP)**

(74) Representative: **MERH-IP**
**Matias Erny Reichl Hoffmann**
**Paul-Heyse-Strasse 29**
**80336 München (DE)**

(56) References cited:
**EP-A- 1 375 234　　EP-A- 1 375 280**
**EP-A- 1 504 947　　DE-A1- 10 205 037**
**DE-A1- 10 259 486　　US-A1- 2004 080 405**

# EP 1 707 462 B1

**Description**

Technical Field

The present invention relates to a pedal system which can electrically control a pedal position or a pedal reaction force and a vehicle system with the pedal system.

Background Art

A driving force and a braking force of the vehicle have been conventionally operated by a pedal. A driver feels an inertia force generated by an acceleration and a deceleration of the vehicle together with a reaction force of the pedal, by pedaling. Accordingly, characteristics such as the pedal position, the pedal reaction force, a driving force of the vehicle, the braking force of the vehicle and the like correspond to factors for determining a drive feeling, an easiness for operation, an easiness for fatigue due to the operation and the like.

On the other hand, since the conventional pedal is mechanically coupled to an accelerator wire and a master cylinder, the characteristics of the pedal are uniquely determined by the mechanism.

However, in recent years, a relation of the pedal position, or the reaction force, or the driving force of the vehicle or the braking force can be optionally set by a technique called as a by-wire, and a discussion has been made how control the relation of the pedal position, the reaction fore, the driving force of the vehicle or the braking force.

For example, there has been known a technique of enlarging the reaction force of the brake pedal or the braking force of the vehicle in correspondence to a speed of the vehicle (refer to JP-A-2001-278020)

US 2004/080405 A1 describes a vehicle driving assist system which detects a vehicle condition and a traveling environment of a subject vehicle; and calculates risk potential around the subject vehicle. The vehicle driving assist system calculates operation reaction force based on the risk potential.

Basically, the pedal reaction force and a pedal effort are forces having an approximately identical value, and the pedal reaction force and the pedal effort are kept in a balanced state at a time when the pedal is stepped down at a certain predetermined pedal position. Further, since the pedal is stepped down, a state of the vehicle is sequentially changed. Accordingly, there is a problem in the case that the pedal reaction force is changed in correspondence to the parameter as in the prior art under a state in which the pedal is stepped down, the balance between the pedal reaction force and the pedal effort collapses and the pedal position moves regardless of an intent of the driver. Further, in the same manner, there is a problem that the driving force and the braking force of the vehicle fluctuates in correspondence to the parameter regardless of the intent of the driver.

Further, although the pedal reaction force or the vehicle output at a time of starting stepping down the pedal in the pedal stepping down operation greatly

affects an easiness for driving the vehicle or an easiness for fatigue or the like, there is room for considering the characteristics of starting stepping down the pedal in the prior art mentioned above while.

Summary of the Invention

The problem is solved by the invention according to claim 1. Further preferred developments are described by the dependent claims.

In order to solve the problem mentioned above, in accordance with the present invention, even if the state of the vehicle changes, a gradient of the pedal reaction force or the vehicle output is changed in correspondence to the parameter without changing the pedal reaction force or the vehicle output.

Further, the present invention changes a minimum pedal effort necessary for moving the pedal position at a time of stepping down the pedal from a state in which the pedal is not stepped down, or a minimum pedal position or pedal effort necessary for outputting the vehicle output at a time of stepping down the pedal from the state in which the pedal is not stepped down, in correspondence to the parameter.

In accordance with the present invention, it is possible to change the pedal position or the vehicle output in correspondence to the parameter on the basis of an operational information, a vehicle information or an environmental information without applying an uncomfortable feeling to the driver. Further, it is possible to achieve a preferable vehicle operation in correspondence to the state of the vehicle even in a step-down start region in which the gradient of the pedal reaction force or the vehicle output is small, by changing the pedal reaction force or the vehicle output at a time of starting stepping down the pedal in correspondence to the parameter. Accordingly, it is possible to improve the easiness for operation and it is possible to reduce the easiness for fatigue caused by the operation.

The above features can be combined in any way partly or as a whole.

Other objects, features and advantages of the invention will become apparent from the following description of the embodiments of the invention taken in conjunction with the accompanying drawings.

Brief Description of the Drawings

Fig. 1 is a schematic view of a system showing an example of a structure in accordance with an embodiment 1;
Fig. 2 is a block diagram of the system showing the example of the structure in accordance with the embodiment 1;
Figs. 3A-3D are schematic views showing an example of structures of an operational input computing system, a vehicle output computing system and a communication path;
Figs. 4A and 4B are schematic views showing an example of a pedal system;
Fig. 5 is a schematic view showing an example of the pedal system;
Fig. 6 is a block diagram showing an example of the pedal system;
Figs. 7A and 7B are views showing an example of a characteristic of a pedal reaction force;
Figs. 8A-8G are schematic views showing an application of the pedal system;
Figs. 9A-9D are views showing an example of a characteristic of the pedal reaction force;
Figs. 10A and 10B are views showing an example of a characteristic of a vehicle output;
Fig. 11 is a view showing an example of a relation between a pedal position and a pedal reaction force (a pedal effort);
Figs. 12A-12D are views explaining a gradient of the pedal reaction force (the pedal effort) and a change rate thereof;
Figs. 13A-13D are views explaining the gradient of the pedal reaction force (the pedal effort);
Fig. 14 is a view showing an example of a relation between a pedal position and a vehicle output;
Figs. 15A-15D are views explaining a gradient of the vehicle output and a change rate thereof;
Figs. 16A-16D are views explaining the gradient of the vehicle output;
Figs. 17A-17D are views explaining an offset of the pedal reaction force and the vehicle output;
Figs. 18A-18C are views explaining a change of the pedal reaction force and the vehicle output on the basis of a parameter;
Figs. 19A-19C are views showing an example in the case that a vehicle speed is employed as the parameter;
Figs. 20A-20C are views showing an example in the case that a curve state is employed as the parameter;
Figs. 21A-21F are views showing an example in the case that a pedal speed is employed as the parameter;
Figs. 22A-22F are views showing an example in the case that a relative relation is employed as the parameter;
Figs. 23A-23F are views showing an example in the case that a vehicle weight or a load amount is employed as the parameter;
Figs. 24A-24F are views showing an example in the case that a gradient of a traveling path is employed as the parameter;
Figs. 25A-25F are views showing an example in the case that a slip rate is employed as the parameter;
Fig. 26 is a schematic view of a system showing an example of a structure in accordance with an embodiment 2;
Fig. 27 is a block diagram of the system showing the example of the structure in accordance with the embodiment 2;
Fig. 28 is a schematic view of a system showing an example of a structure in accordance with an embodiment 3; and
Fig. 29 is a block diagram of the system showing the example of the structure in accordance with the embodiment 3.

Description of Preferred Embodiments

A description will be given below of an embodiment in accordance with the present invention with reference to the accompanying drawings.

(Embodiment 1)

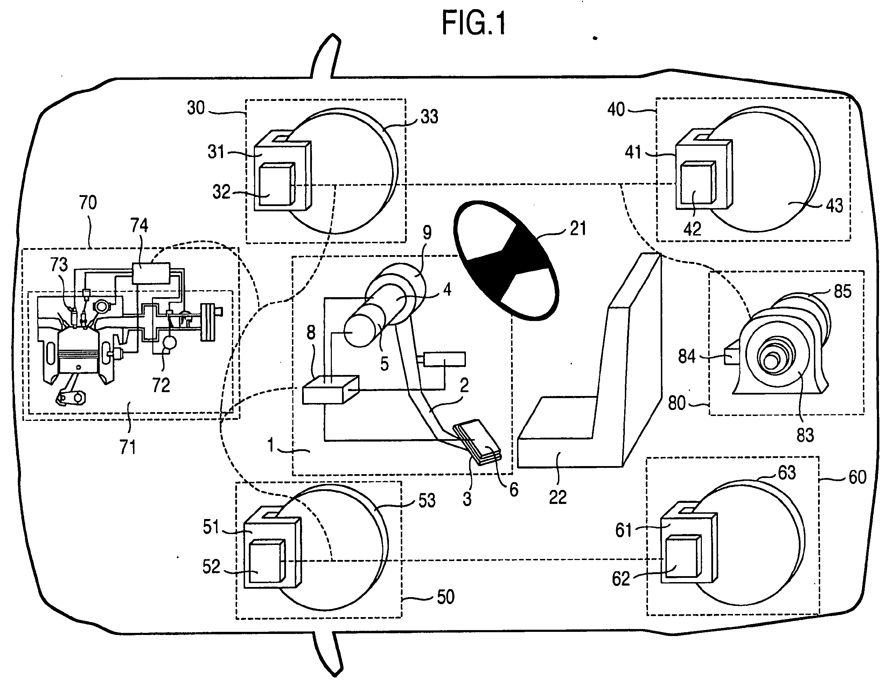

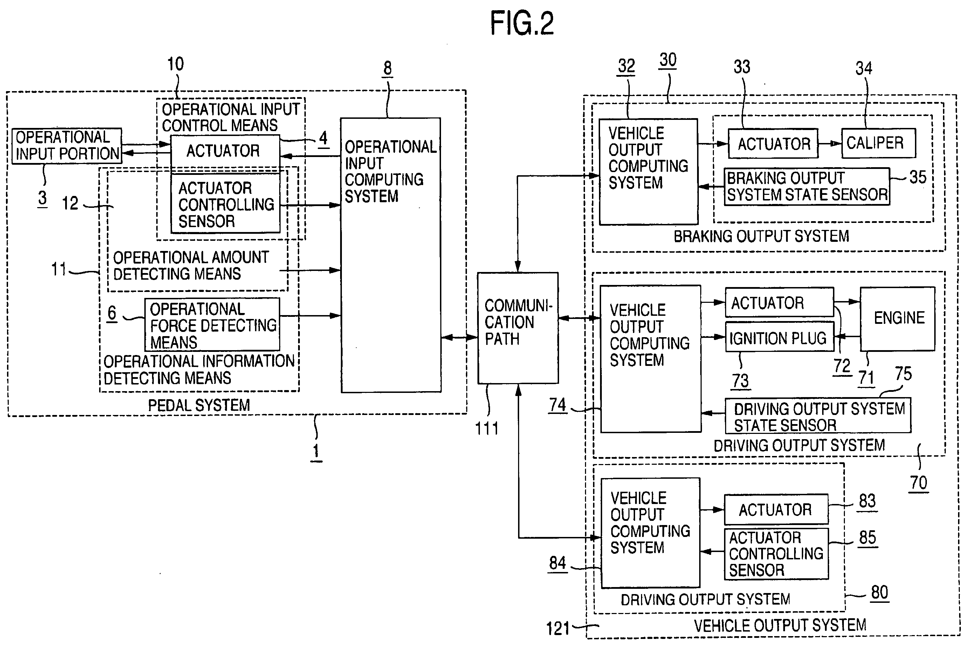

Fig. 1 is a schematic view of a system structuring the present invention. Further, Fig. 2 is a block diagram of the system structuring the present invention.
Reference numeral 1 denotes a pedal system which a driver operates for driving a vehicle. The pedal system 1 changes a pedal position and a pedal speed within a fixed range, for example, on the basis of a pedal effort generated by the driver stepping down. Further, the pedal system 1 carries on a curvilinear motion or a linear motion which is constrained in a fixed range with respect to the pedal effort.
In this case, all the input which the driver applies to the pedal system is defined as an operational input. The operational input includes a pedal effort, a pedal position, a pedal velocity and an information whether or not the pedal is stepped down.
In the pedal system 1, the pedal position is changed in correspondence to the pedal effort. Further, the pedal reaction force is generated in correspondence to the pedal position. Alternatively, the pedal reaction force is generated with respect to the pedal effort, and an operational feeling of the pedal is applied to the driver. The operational feeling of the pedal greatly affects a drive feeling of the vehicle in general.

In the pedal system 1, a relation between the pedal position and the pedal reaction force or the pedal effort can be optionally set in accordance with an electric control. In this case, the pedal position corresponds to an amount at which the pedal is stepped down or an operational amount of the pedal. The pedal position may be called as a pedal stroke or simply called as a stroke. The pedal velocity corresponds to a velocity at a time of stepping down the pedal or releasing the pedal or an operational velocity. The pedal velocity may be called as a pedal stroke velocity or simply called as a stroke velocity. The pedal velocity corresponds to a displacement amount of the pedal position by the hour or a value obtained by differentiating the pedal position by time, and can be determined from the pedal position in accordance with a computation. The pedal effort corresponds to a force applied by the driver for moving the pedal system, and generally corresponds to a stepping force by a foot or an operational force. Further, the pedal reaction force corresponds to a force applied to the driver from the pedal system at a time when the driver operates the pedal, and corresponds to an operation reaction force. The pedal reaction force may be called simply as a reaction force. The pedal reaction force corresponds to a force which forms a pair together with the pedal effort, and generally corresponds to a force in an opposite direction to the pedal effort. In particular, when the pedal does not move under a state in which the pedal is stepped down, or when the motion of the pedal is not accelerated, the pedal effort and the pedal reaction force are balanced, and have approximately equivalent forces. Accordingly, when the pedal reaction force has a certain value, it is possible to say that the pedal effort has the same value, and vice versa.

Further, reference numerals 30, 40, 50, 60, 70 and 80 denote a vehicle output system changing a motion of the vehicle. The vehicle in Figs. 1 and 2 corresponds to an application of a by-wire technique. In particular, a combination of the vehicle output systems 30, 40, 50 and 60 and the pedal system 1 corresponds to an application of a brake by-wire technique, and the pedal system 1 in the brake by-wire technique corresponds to a brake pedal. Further, the pedal system 1 in the case of combining at least one of the vehicle output systems 70 and 80 with the pedal system 1 corresponds to an accelerator pedal.

No mechanical connection exists between the pedal system and the vehicle output system, and the pedal system and the vehicle output system are connected on the basis of an exchange of an electric signal. Further, the information is transmitted by communication between the pedal system and the vehicle output system via a communication path 111. The operational input to the pedal system is transmitted as an electric signal to the vehicle output system, and the vehicle output system carries on a vehicle output on the basis of the transmitted signal information. Since the pedal system and the vehicle output system have no mechanical connection, it is possible to control the pedal position and the pedal reaction force of the pedal system independently from the control of the vehicle output of the vehicle output system.

In this case, a description will be given of details of the pedal system 1. The pedal system 1 is provided with an actuator 4, and the actuator 4 can be electrically controlled. The actuator 4 is constituted, for example, by an electric motor or a motor, and is structured such that a member 2 is rotated around a rotating shaft 9 or a force in a rotation direction is generated by supplying an electric power to the actuator 4 or applying the current to the actuator 4. The actuator 4 is controlled by an operational input computing system 8, and it is possible to optionally change the pedal position, the pedal velocity and the pedal reaction force by controlling the actuator 4. Further, the operational input computing system 8 transmits a vehicle output command to the vehicle output systems 30, 40, 50, 60, 70 and 80, and carries on the vehicle output in correspondence to the operational input.

The pedal system 1 is provided with an operational input portion 3 serving as a working point stepped by the foot. The pedal system 1 is provided with an operational information detecting means 11. The operational information detecting means 11 includes an operational amount detecting means 12 and an operational force detecting means 6.

The operational amount detecting means 12 employs, for example, an aspect such as reference numeral 5, and detects the operational amount or the pedal position. The operational amount or the pedal position detected by the operational amount detecting means 12 may be constituted by an amount at which the member 2 rotates around the rotating shaft 9, or may be constituted by an amount at which the operational input portion 3 moves or strokes. Further, it may detect an operational velocity or a pedal velocity in some cases, or may detect the operational velocity or the pedal velocity by carrying on the computation on the basis of the operational amount or the pedal position.

The operational force detecting means 6 detects the operational force or the pedal effort, and simultaneously detects the operational reaction force or the pedal reaction force. In this case, since the operational force detecting means 6 is a means for detecting the force, it detects the operational force and the operational reaction force as the same subject. The force detected by the operational force detecting means 6 may be constituted by a force applied for rotating the member 2 around the rotating shaft 9, or may be constituted by a force applied for moving or stroking the operational input portion 3.

The operational input computing system 8 controls the actuator 4 on the basis of the operational information detected by the operational information detecting means 11, and changes the pedal position, the pedal velocity or the pedal reaction force on the basis of the operational information detected by the operational information detecting means 11. Further, the operational input computing system 8 determines the vehicle output command on the basis of the operational information detected by the operational information detecting means 11, and transmits the determined vehicle output command to the vehicle output system via the communication path 111.

The vehicle output systems 30, 40, 50 and 60 correspond to a braking output system which can be electrically controlled. The vehicle output by the control output system corresponds to a deceleration or a braking force of the vehicle, and the braking output system generates the braking force in the vehicle on the basis of the transmitted vehicle output command, and decelerates the vehicle. Accordingly, the vehicle output command transmitted to the braking output system may be constituted by the deceleration or the braking force of the vehicle.

In this case, the braking output system may be constituted, for example, by a caliper, or may be constituted by an electric brake which can electrically control a thrust of a piston pressing a rotor. In the case that the braking output system is constituted by the electric brake, it may be provided with an actuator for generating an electric force, may be constituted by a mechanism in which a force generated by the actuator is converted into the thrust of the piston via a mechanical structure such as a decelerator or the like, or may be constituted by a mechanism which can control the braking force of the vehicle by controlling the piston thrust.

Further, the braking output system may be constituted, for example, by a caliper, or may be constituted by an electro-hydraulic rake which can generate the thrust of the piston pressing the rotor and can electrically control a hydraulic pressure. In the case that the braking output system is constituted by the electro-hydraulic brake, it may be provided with an actuator generating an electric force, may be constituted by a mechanism which can change the hydraulic pressure by the actuator, or may be constituted by a mechanism which can control the braking force of the vehicle by controlling the hydraulic pressure.

Accordingly, the vehicle output command transmitted to the braking output system may be constituted by the thrust of the electric brake or may be constituted by the hydraulic pressure of the electro-hydraulic brake.

A description will be given here of details of the braking output system 30. The braking output systems 40, 50 and 60 basically have the same structure as the braking output system 30.

For example, the braking output system 30 controls the braking force generated in a caliper 34 by an actuator 33. The actuator 33 is controlled by a vehicle output computing system 32. A state of the control output system can be detected by a braking output system state sensor 35. The vehicle output system computing system 32 controls the actuator 33 in correspondence to the state of the control output system. The vehicle output system computing system 32 may transmit the state of the control output system to the pedal system 1 via the communication path 111 as occasion demands. The state of the control output system may include a thrust generated in the electric brake or a hydraulic pressure generated in the electro-hydraulic brake.

The vehicle output systems 70 and 80 are constituted by an electrically controllable driving output system. The vehicle output by the driving output system corresponds to a speed, an acceleration or a driving force of the vehicle. The driving output system generates a driving force in the vehicle on the basis of the transmitted vehicle output command, and accelerates the vehicle. Accordingly, the vehicle output command transmitted to the driving output system may be constituted by the speed, the acceleration or the driving force of the vehicle.

As the driving output system of the vehicle, a structure of an engine such as 70 is generally employed in many cases. However, in a hybrid vehicle, an electric vehicle, a motor-driven four-wheel vehicle or the like, a structure of an electric motor such as 80 is employed as the driving output system, or a structure of a combination between the engine and the electric motor is employed.

A description will be given here of details of the driving output system 70. The driving output system 70 is constituted by an engine, for example, a mechanism driving the vehicle by using a gasoline or a diesel oil as a fuel. The driving output system 70 controls an actuator 72 or an ignition plug 73 in correspondence to the transmitted vehicle output command and a state of the driving output system, and generates a vehicle output in an engine 71. The state of the driving output system is detected by a driving output system state sensor 75. The actuator 72 is controlled by a vehicle output computing system 74. The vehicle output computing system 74 may transmit the state of the driving output system to the pedal system 1 via the communication path 111 as occasion demands. The state of the driving output system may include a driving force or a rotating speed of the engine 71.

A description will be given here of details of the driving output system 80. The driving output system 80 is constituted, for example, by an electric motor, and generates the vehicle output by supplying the electric power or applying the current. For example, the driving output system 80 is provided with an actuator 83 and a sensor 85 for controlling the actuator, and is controlled by a vehicle output computing system 84. The vehicle output computing system 84 may transmit a state of the driving output system 80 to the pedal system 1 via the communication path 111 as occasion demands.

In this case, there is practically a case that the vehicle output command and the vehicle output do not completely coincide with each other. However, it does not form an essential factor how much faithfully the vehicle output system can output the vehicle output in accordance with the vehicle output command. Accordingly, the following description is based on the matter that the vehicle output equals to the vehicle output command. In other words, in the present invention, the vehicle output may be replaced by the vehicle output command, and outputting the vehicle output on the basis of the pedal effort is synonymous with outputting the vehicle output command by the vehicle. Further, in the explanation by the drawing, the shaft of the vehicle output is essentially equivalent to the shaft of the vehicle output command, and the vehicle output command may be used in place of the vehicle output.

The communication path 111 corresponds to an information path by an electric signal connecting between the pedal system and the vehicle output system, and is physically structured by an electric wire. The pedal system and the vehicle output system are installed in spatially apart places in many cases, and the information therebetween is generally exchanged via the communication path 111 by using an electric signal of a time division multiplexing communication system. A type of the electric signal used in the communication path 111 may be constituted by a serial communication, or a multiplex communication such as CAN, Flax Ray, LAN or the like.

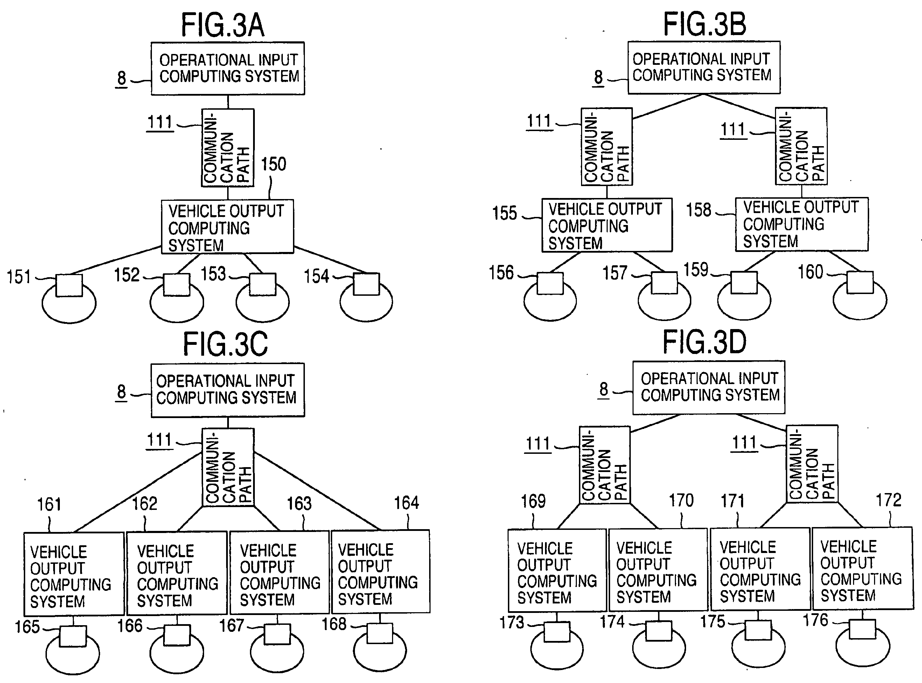

Fig. 3 shows structures of the operational input computing system, the vehicle output computing system and the communication path. In Fig. 3A, the number of the communication path is one, and vehicle output systems 151 and 154 are controlled by one vehicle output computing system 150. The structure may be made such that a number of the system controlling the hydraulic pressure is only one, for example, such as an ABS system and a side slip preventing system, the hydraulic pressure is transmitted to each of the calipers, and an electric communication with the operational input computing system 8 is carried on via one communication path 111.

In Fig. 3B, the number of the communication path 111 is two, and vehicle output systems 156 to 160 are controlled by a plurality of vehicle output computing systems 155 and 158. For example, in the case that different hydraulic systems are provided in front wheels and rear wheels of the vehicle, a number of the apparatus controlling the hydraulic pressure is two, and two path carrying on the electric communication with the pedal system are necessary. Since the number of the system is two, it is possible to improve a reliability, and it is possible to improve a vehicle motion performance by carrying on the vehicle output per the systems.

In Fig. 3C, the number of the communication path 111 is one, however, vehicle output systems 165 to 168 are controlled respectively by different vehicle output computing systems 161 to 164. For example, in the case that the electric brake is installed in all the four wheels of the vehicle, there can be considered that each of the wheels is provided with a system controlling the vehicle output, and the communication with the pedal system is carried on. Since all the four wheels of the vehicle independently control the vehicle output, it is possible to intend an improvement of the vehicle motion performance at a higher level.

In Fig. 3D, the number of the communication path 111 is two, and vehicle output systems 173 to 176 are controlled respectively by different vehicle output systems 169 to 172. For example, in the case that the electric brake is installed in all the four wheels of the vehicle, the structure may be made such that a front right wheel and a rear left wheel are communicated with the pedal system via the same communication path, and a front left wheel and a rear right wheel are communicated with the pedal system via the same communication path in the case that each of the wheels is provided with a system controlling the vehicle output. Further, for example, in the case that the electric brake is installed in all the four wheels of the vehicle, the structure may be made such that two front wheels are communicated with the pedal system via the same communication path and the two rear wheels are communicated with the pedal system via the same communication path in the case that each of the wheels is provided with the system controlling the vehicle output. Since the communication path is formed double, the vehicle output system belonging to another communication path is operated even in the case that any fault or trouble is generated in one communication path. Accordingly, it is possible to intend an improvement of a reliability as an entire vehicle.

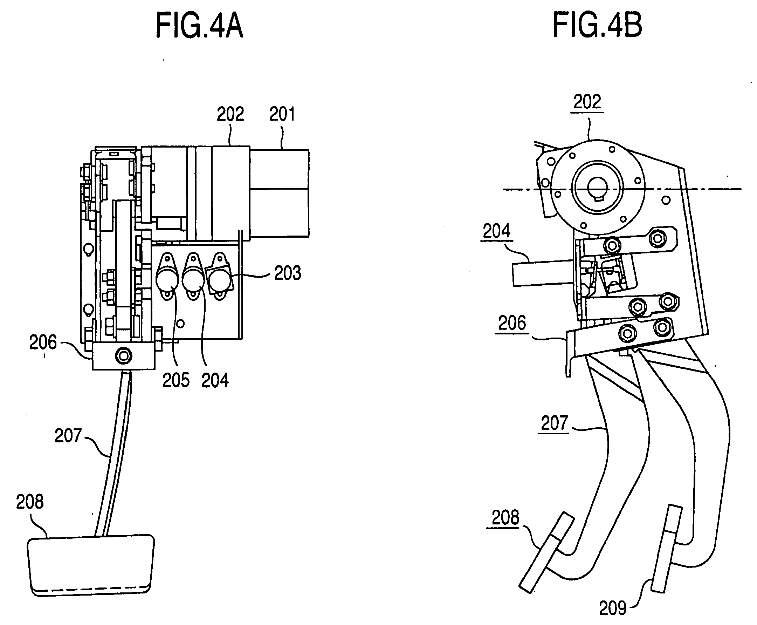

Fig. 4 shows an example of the pedal system. Fig. 4A is a view as seen from a front face at a time when a case that the pedal system attached to the vehicle is seen from a driver seat is set to a front face, and Fig. 4B is a view in the case of seeing the petal system from a side face.

The pedal system in Fig. 4 is provided with an actuator 201. The actuator 201 is constituted by an electric motor or a motor, and is rotated and generates a force in a rotation direction by supplying the electric power or applying the current. The actuator 201 may be constituted by a DC motor, or may be constituted by a DC brushless motor, may be constituted by an AC induction motor or may be constituted by an AC synchronous motor.

Further, the pedal system in Fig. 4 is provided with a decelerator 202. The decelerator 202 may be constituted by a gear, may be constituted by a planetary gear or may be constituted by a differential decelerator. Further, the pedal system in Fig. 4 is provided with a pedal switch 203. The pedal switch 203 corresponds to a switch which can determine whether or not the pedal is stepped down.

Further, the pedal system in Fig. 4 is provided with pedal stroke sensors 204 and 205. The pedal stroke sensors 204 and 205 can detect a pedal position or a pedal stroke as an operational amount. Since two pedal stroke sensors are provided, it is possible to improve a precision for detecting the operational amount, and it is possible to improve a reliability by obtaining a resistance against one failure.

The pedal system in Fig. 4 is provided with an origin position stopper 206. The origin point corresponds to a pedal position at a time when the driver does not step down the pedal, or a pedal position at a time when the operational force or the pedal effort is not applied to the pedal system. In this case, when the pedal exists at the origin position, it can be said that the pedal position is 0. It is possible to determine by the pedal switch 203 whether or not the pedal exists at the origin position. Further, on the contrary, in the case that the pedal exists at the origin position, it is possible to determine that the pedal is not stepped down.

A member 207 can move leftward to a position at which the member 207 is brought into contact with the origin position stopper 206 in Fig. 4B. A direction of a movement to a left side in Fig. 4B, that is, a direction of a movement to the origin position is defined as a direction of a driver seat, a near side direction, a returning direction or a releasing direction. Further, a direction of a movement to a right side in Fig. 4B, that is, a direction of a movement at a time of stepping down the pedal is defined as a far side direction or a stepping direction.

The pedal system in Fig. 4 is provided with a pedal end 208. The pedal end 208 corresponds to a portion which the driver steps down, and corresponds to the input portion 3 of the pedal system 1. When the pedal effort is applied to the pedal end 208, the pedal travels, and the pedal position moves, for example, 209. It is defined that the pedal position adopts a larger value toward the far side direction and adopts a smaller value toward the near side direction, and the pedal is stepped down at a time of moving the pedal from the near side to the far side. Further, it is defined that the pedal is released or returned at a time of moving the pedal from the far side to the near side. Further, it is defined that the pedal is held at a time of maintaining the pedal so as to prevent the pedal position from being changed. In the general pedal system, the pedal position at a time of traveling to the maximum is about 0.03 to 0.1 m.

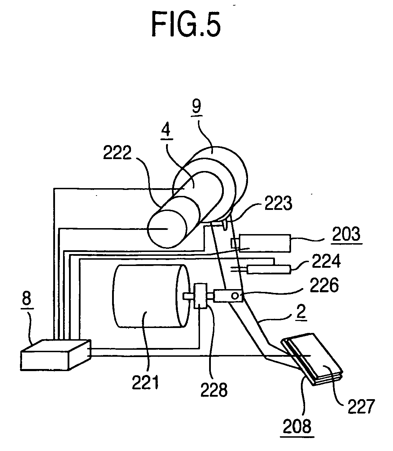

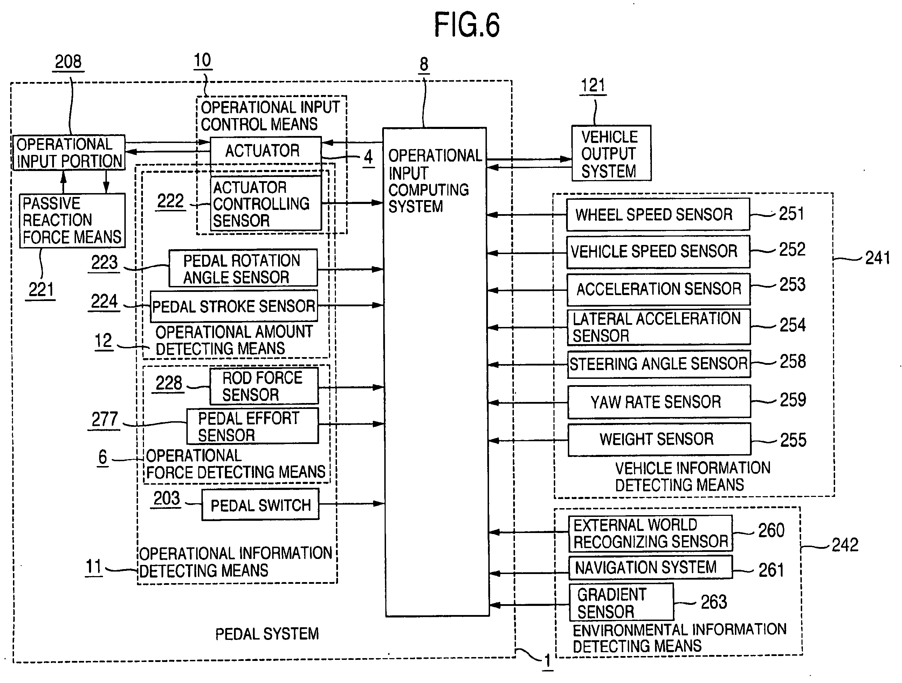

Fig. 5 schematically shows an embodiment of the pedal system, and Fig. 6 is a block diagram schematically showing a pedal system in Fig. 5 and relevant means. The pedal system in Figs. 5 and 6 is provided with a passive reaction force means 221. The passive reaction force means 221 may be constituted by a mechanism by a spring, or a hydraulic mechanism having a viscosity such as a stroke simulator.

In this case, a pedal reaction force generated by the actuator 4 is called as an active reaction force, and a pedal reaction force generated by the passive reaction force means 221 is called as a passive reaction force. The pedal system 1 can generate a pedal reaction force obtained by combining the active reaction force and the passive reaction force. Since the passive reaction force generated by the passive reaction force means 221 is defined by a mechanical characteristic of the passive reaction force means 221 and can not be controlled electrically, the pedal reaction force is generated by adding or reducing the active reaction force to or from the passive reaction force.

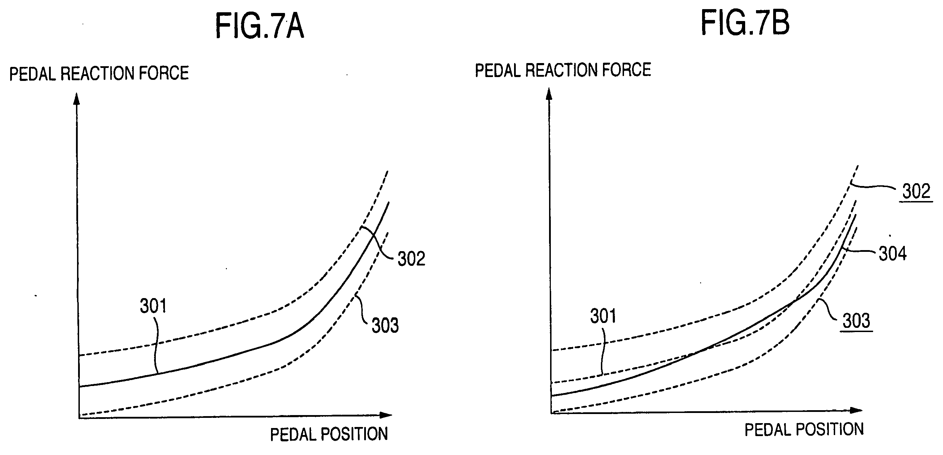

Fig. 7 shows an example expressing a relation between the passive reaction force, the active reaction force and the pedal reaction force. Reference numeral 301 denotes a passive reaction force. The passive reaction force 301 is not changed by an electric element. Since the active reaction force can be optionally changed electrically, it is possible to change the pedal reaction force, for example, in a range from 302 to 303. The passive reaction force 301 becomes larger in accordance that the pedal position becomes larger, however, a width of the pedal reaction force which can be changed by the active reaction force is fixed regardless of the pedal position. The pedal reaction force obtained by applying the active reaction force around the passive reaction force 301 can adopt an optional value from 302 to 303. Accordingly, it is possible to achieve a pedal reaction force, for example, 304. It is possible to make a capacity, a magnitude or an electric power consumption of the actuator 4 small by using the passive reaction force means. Further, in the case that the actuator 4 can generate a sufficient pedal reaction force, the pedal system can be structure only by the active reaction force without using the passive reaction force means 221.

The pedal system in Figs. 5 and 6 is provided with an actuator controlling sensor 222 which can detect a rotation angle or a rotation phase of the actuator 4. The sensor 222 may be constituted by an encoder utilizing a light or a magnetism, or may be constituted by a resolver.

Further, the pedal system in Figs. 5 and 6 is provided with a pedal rotation angle sensor 223 which can detect an angle of the member rotating with respect to the rotation shaft 9. The sensor 223 may be constituted by a potentiometer or a rotary encoder using a variable resistance, or may be constituted by a system detecting by an optical pickup by using a rotation slit, or may be constituted by a system detecting a change of the magnetism by using an electric element.

Further, the pedal system in Figs. 5 and 6 is provided with a pedal stroke sensor 224 which can detect an amount at which the member 2 or the pedal end 208 travels or a pedal position.

The sensor 224 may be constituted by the potentiometer using the variable resistance, or may be constituted by a method of detecting a displacement width as a change of the magnetic resistance by using a magnetic circuit.

In this case, it is possible to detect the pedal position or the pedal velocity by using at least one of the sensors 222, 223 and 224, and at least one of the sensors 222, 223 and 224 is included in the operational amount detecting means 12.

The pedal system in Figs. 5 and 6 is provided with a pedal effort sensor 227. The sensor 227 can detect the pedal effort at which the driver steps down the pedal or the pedal reaction force at which the pedal pushes back the foot of the driver. Further, the pedal system in Figs. 5 and 6 is provided with a rod force sensor 228. The sensor 228 can detect a force applied between the member 2 and the passive reaction force means 221. The sensors 227 and 228 may be structured such as to detect the force, for example, by using a resistance change of a strain gauge. In this case, it is possible to detect the operational force or the pedal effort by using at least one of the sensors 227 and 228, and at least one of the sensors 227 and 228 is included in the operational force detecting means 6.

Further, the pedal system in Figs. 5 and 6 is provided with a pedal switch 203. In this case, in the case that the pedal system 1 is constituted by a brake pedal, the pedal switch 203 may be constituted by a brake switch. In the case that the pedal system 1 is constituted by an accelerator pedal, the pedal switch 203 may be constituted by an accelerator switch.

The pedal system 1 detects a vehicle information by using a vehicle information detecting means 241. The vehicle information includes a wheel speed, a vehicle speed, an acceleration, a lateral acceleration, a steering angle, a steering angular velocity, an angular velocity of the vehicle, an angular acceleration of the vehicle, a yaw rate, a vehicle weight, a load and the like. The vehicle information detecting means 241 includes a wheel speed sensor 251, a vehicle speed sensor 252, an acceleration sensor 253, a lateral acceleration sensor 254, a weight sensor 255, a steering angle sensor 258 and a yaw rate sensor 259.

In this case, the wheel speed sensor 251 corresponds to a sensor detecting a rotation speed of the wheel, and may be constituted by a system detecting a rotating speed of the wheel by using a magnetic circuit attached to an axle, or may be constituted by a system detecting the rotating speed of the wheel by attaching a disc having a slit to the axle and using a light. Further, the vehicle speed sensor 252 may be constituted by a system directly detecting the speed of the vehicle, or may be constituted by a system determining and detecting the vehicle speed on the basis of the wheel speed obtained by the wheel speed sensor 251. The acceleration sensor 253 corresponds to a sensor measuring the acceleration applied in a longitudinal direction of the vehicle, and may be constituted by a system detecting by utilizing a strain gauge or a piezoelectric element, or may be constituted by a system calculating the vehicle speed in accordance with a differentiation. Further, the lateral speed sensor 254 corresponds to a sensor measuring the acceleration applied in a lateral direction of the vehicle, and may be constituted by a system detecting by utilizing the strain gauge or the piezoelectric element.

The weight sensor 255 corresponds to a sensor measuring the passenger or the weight of the load. The vehicle weight or the load may be calculated by the weight sensor 255. Further, the vehicle weight and the load may be estimated on the basis of a relation between the driving force of the driving output system and the vehicle motion by a calculation. The steering angle sensor 258 corresponds to a sensor measuring the steering angle or the steering angular velocity of the steering, and may be constituted by a system detecting a change of a resistance value of a variable resistance such as the potentiometer, or may be constituted by a system measuring the angle on the basis of the magnetic circuit and the light. The steering angular velocity may be determined by the calculation from the steering angle. The yaw sensor 259 detects the angular velocity of the vehicle, the angular acceleration of the vehicle, the yaw rate and the like. The yaw rate sensor may be constituted by a system utilizing the strain gauge or the piezoelectric element. Further, the angular acceleration and the yaw rate of the vehicle may be determined by the calculation from the angle velocity and the lateral acceleration of the vehicle, or may be estimated on the basis of the steering angle.

The pedal system 1 detects an environmental information by using an environmental information detecting means 242. The environmental information includes a relative relation with the other vehicle, a pedestrian or an obstacle, a curvature of a traveling road, and a gradient of the traveling road. In this case, the relative relation with the other vehicle, the pedestrian or the obstacle includes a relative distance, a relative speed and a collision time. The collision time corresponds to an expected time until the collision with the other vehicle, the pedestrian or the obstacle, and can be expressed by a formula collision time = relative distance/relative speed. The environmental information detecting means 242 includes an external world recognizing sensor 260, a navigation system 261 and a gradient sensor 263.

The external world recognizing sensor 260 may be constituted by a radar detecting the relative distance or the relative speed with respect to the other vehicle or the obstacle by using an infrared laser or an extremely high frequency wave. Further, the external world recognizing sensor 260 may be constituted by a system detecting the relative distance or the relative speed with respect to the other vehicle or the obstacle by using an ultrasonic wave or an optical camera.

The navigation system 261 is provided with a GPS, and can detect a traveling position of the vehicle at the time point on the earth. Further, the navigation system 261 is provided with a map information, and can detect a road condition around the traveling position of the vehicle. The navigation system 261 can detect a curvature of the traveling road on the basis of the road condition. The curvature of the traveling road may be estimated on the basis of the steering angle and the yaw rate in accordance with a calculation.

The gradient sensor 263 can detect the gradient of the traveling road on which the vehicle travels. In this case, the gradient in the case that the traveling road is flat is set to 0 degree, the gradient in a downward slope is set to negative and the gradient in an upward slope is set to positive. The gradient sensor may be structured such as to determine the slope of the traveling road, for example, by employing the accelerator sensor or utilizing the gravity. Further, it may be structured such as to determine the gradient of the traveling road on the basis of the driving force or the braking force generated during the traveling and the motion state of the traveling vehicle in accordance with a computation.

The operational input computing apparatus 8 controls the operational input control means 10 so as to change the pedal reaction force generated in the operational input portion 208 and change the pedal position and the pedal velocity, by using the operational information, the vehicle information or the environmental information, and transmits the vehicle output command to the vehicle output system 121 so as to generate the vehicle output, by using the operational information, the vehicle information or the environmental information.

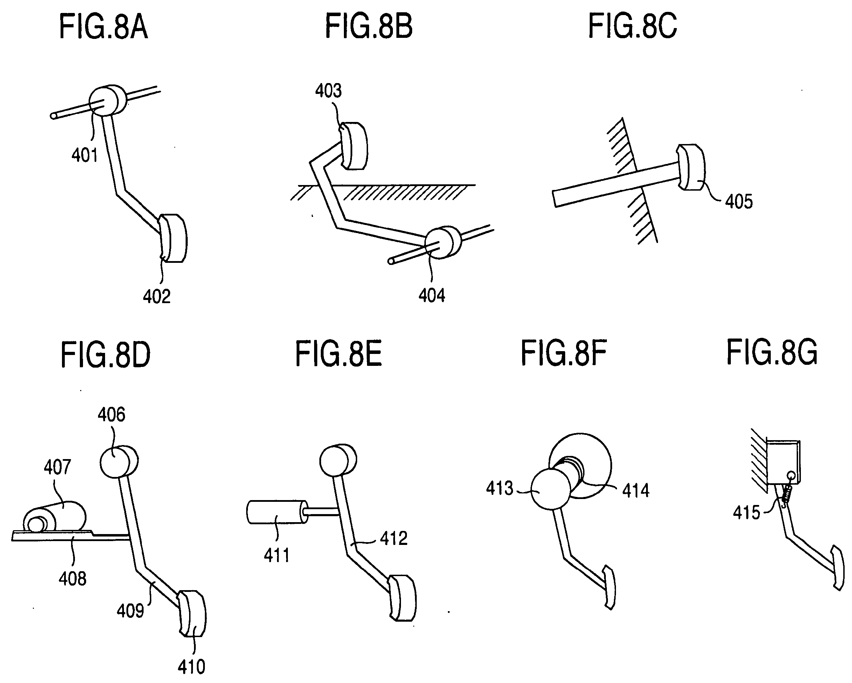

Fig. 8 is a schematic view showing an application of the pedal system. Fig. 8A shows a pedal system in the case that an operational input portion 402 is arranged below a rotating shaft 401, and Fig. 8B shows a pedal system in the case that an operational input portion 403 is arranged above a rotating shaft 404. Further, Fig. 8C shows a case that the rotating shaft is not provided and a pedal system is directly moved with respect to an operational input to an operational input portion 405, and Fig. 8D shows a pedal system in which a rotating shaft 406 and an actuator 407 are independently provided. A rotational output of the actuator 407 is converted into an output in a direct moving direction by a rotation and direct motion converting mechanism 408 so as to be applied to a member 409, thereby moving a pedal end 410 or generating an operational reaction force. In this case, the rotation and direct motion converting means may employ, for example, a worm gear or a ball screw.

Further, Fig. 8E shows a pedal system in which an actuator 411 is not constituted by a rotational electric motor, but is displaced in a direct moving direction or outputs a force in the direct moving direction. An output of the actuator 411 is applied to a member 412, thereby moving a pedal position and generating an operational reaction force. The actuator 411 may be constituted, for example, by a solenoid. Further, Fig. 8F shows a pedal system in the case that a passive reaction force means 414 is attached to a rotating shaft 413, and Fig. 8G shows a pedal system in the case that a passive reaction force means 415 is attached near the rotating shaft.

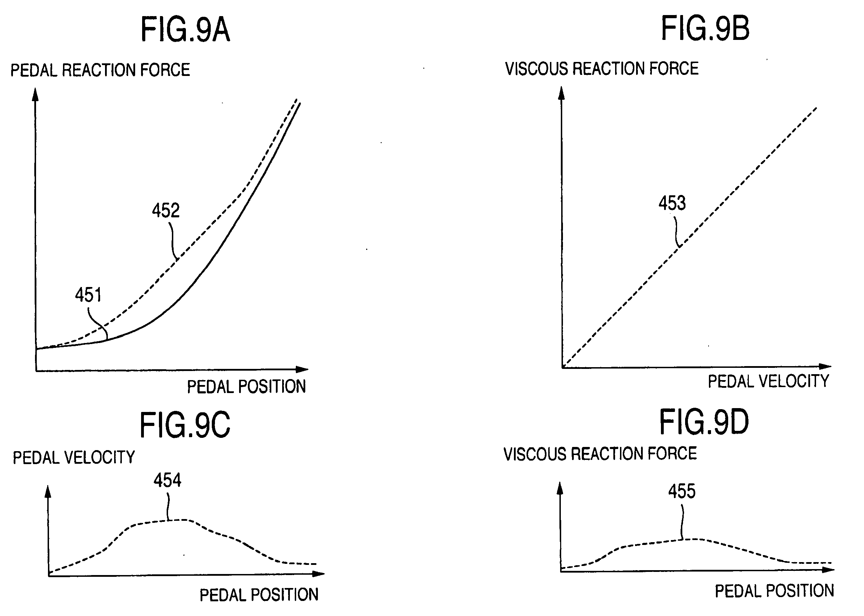

Fig. 9 is a view showing an example of a pedal reaction force. Reference numeral 451 in Fig. 9A is called as a stiffness reaction force, corresponds to a reaction force in which a magnitude is changed in correspondence to a pedal position, and adopts a larger value in accordance that the pedal position becomes larger. In this case, the pedal in which the stiffness reaction force is comparatively larger at the same pedal position can be called as a stiff pedal, and the pedal in which the stiffness reaction force is comparatively smaller can be called as a soft pedal. Reference numeral 453 in Fig. 9B is called as a viscosity reaction force, corresponds to a reaction force in which a magnitude is changed in correspondence to a pedal velocity, and adopts a larger value in accordance that the pedal speed becomes larger.

In the case that the pedal velocity, for example, at a time of stepping the pedal is shown by reference numeral 454 in Fig. 9C, the viscous reaction force becomes as shown by reference numeral 455 in Fig. 9D. The pedal reaction force is obtained by adding the stiffness reaction force and the viscosity reaction force, and is shown by reference numeral 452 in Fig. 9A.

In this case, on the assumption that the pedal reaction force is set to F and the pedal position is set to x, the pedal velocity is expressed by dx/dt, and can be expressed by the formula (1) or the formula (2) on the assumption that the stiffness reaction force depending on the pedal position is set to Fk(x) and the viscosity reaction force depending on the pedal velocity is set to Fd(dx/dt).

$$F \ = \ Fk(x) \ + \ Fd(dx/dt) \qquad\qquad (1)$$

$$F \ = \ Fk(x) \ + \ Kd \ \times \ dx/dt \qquad\qquad (2)$$

Accordingly, Fd(dx/dt) can be expressed by the following formula (3), and Kd is a predetermined constant.

$$Fd(dx/dt) \ = \ Kd \ \times \ dx/dt \qquad\qquad (3)$$

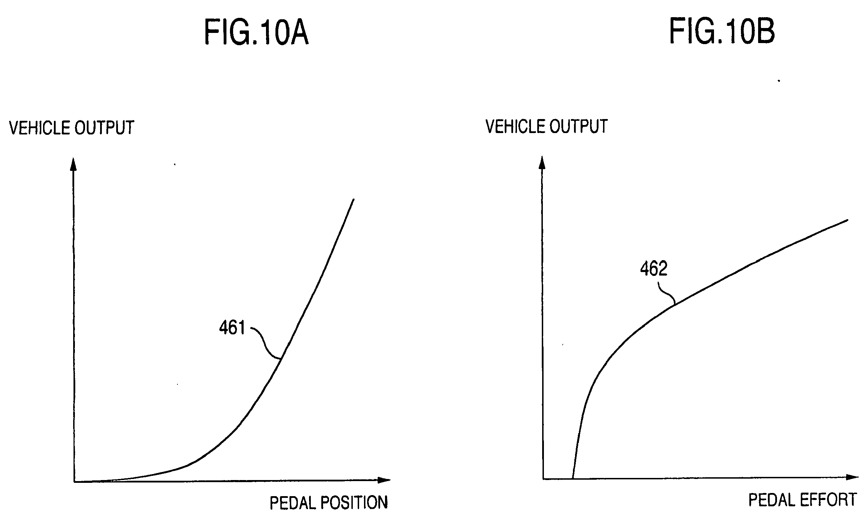

In this case, the vehicle output can be set, for example, as shown in Fig. 10. It is necessary that the vehicle output has a correlation with the operational input, the vehicle output may be generated in correspondence to the pedal position, or the vehicle output may be generated in correspondence to the pedal effort or the pedal reaction force. In the case that the vehicle output is set on the basis of the pedal position, the vehicle output is set in such a manner as to protrude downward such as Fig. 10A. Further, in the case that the vehicle output is set on the basis of the pedal effort, the vehicle output is set in such a manner as to protrude upward as shown in Fig. 10B.

In this case, since the driver operates vehicle while feeling the stepping amount, the pedal reaction force in correspondence thereto, and an inertia force on the basis of the vehicle output, an easiness for operation (an operability), a hardness for fatigue and a pleasure for operation (an amenity) are changed in correspondence to the relation among the pedal position, the pedal reaction force and the vehicle output. Accordingly, the pedal system achieves the pedal position, the pedal reaction force and the vehicle output having a preferable relation by using the operational input control means 10.

In accordance with the pedal system having the actuator, it is possible to change the relation between the pedal position and the pedal reaction force in correspondence to the parameter on the basis of the operational information, the vehicle information, the environmental information and the like during the traveling, by electrically controlling the relation between the pedal position and the pedal reaction force. Further, in the by-wire system, it is possible to change the relation between the pedal position or the pedal effort and the vehicle output in correspondence to the parameter even during the traveling. It is possible to achieve the pedal system or the vehicle system in correspondence to the traveling condition, by changing the pedal characteristic and the vehicle output characteristic on the basis of the parameter.

For example, in the case that the vehicle travels at a high speed, there is a tendency that a pedal system having a quick response and a certain degree of steady stepping response is preferred, and there is a pedal which is always stiff with respect to the stepping and always has a comparatively larger vehicle output, in a part of sports cars. Further, in the case of traveling at a low speed, there is a tendency that a soft pedal is preferred for easily operating the pedal system and obtaining a stable vehicle operation even in a reduced pedal effort, and there is a pedal which is always soft with respect to the stepping and always has a smaller vehicle output in comparison with a part of the sports car, in a part of family cars and the like.

In the conventional vehicle, it is necessary to mainly aim the driver and the used condition to be subjected and set the pedal position, the pedal reaction force and the vehicle output, however, in accordance with the pedal system having the actuator and the by-wire system, it is possible to achieve the preferable pedal system in correspondence to the condition at that time point, by changing the characteristic in real time.

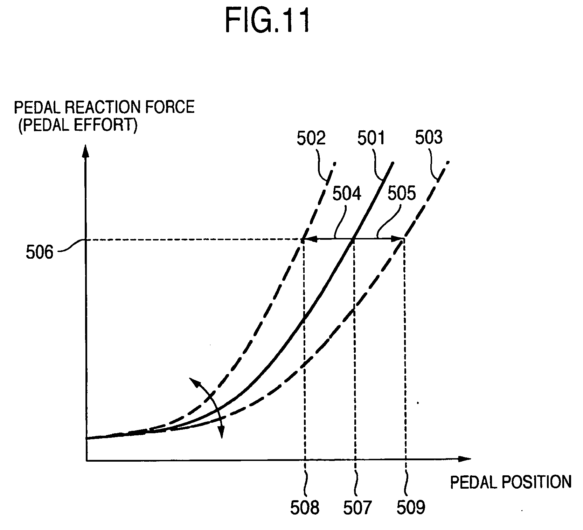

Fig. 11 shows a case that the pedal reaction force is changed, for example, on the basis of the parameter. In the case that the pedal reaction force is changed on the basis of the parameter, for example, from reference numeral 501 to reference numeral 502, it is possible to achieve the stiffer pedal, however, the pedal position forming the pedal reaction force balancing with the pedal effort is changed from reference numeral 507 to reference numeral 508. Accordingly, the pedal arbitrarily moves to the near side such as reference numeral 504 regardless of the intention of the driver. Further, even in the case that the pedal becomes soft such as from reference numeral 501 to reference numeral 503, the pedal reaction force becomes smaller with respect to the pedal stepping force, and the pedal is automatically contracted such as reference numeral 505 regardless of the intention of the driver.

If the pedal moves regardless of the intention of the driver, not only a great uncomfortable feeling is applied to the driver, but also an unexpected driving operation is carried on. Accordingly, the pedal reaction can be changed as shown in Fig. 11 only at a time when the pedal is not stepped down.

However, since the parameters on the basis of the operational information, the vehicle information and the environmental information fluctuate hour by hour during the pedal operation, it is essential to achieve the pedal characteristic during the pedal operation in order to achieve the stiffness and the softness of the pedal in correspondence to the parameters. Accordingly, there is employed a method of changing the stiffness and the softness of the pedal even during the pedal operation, by changing the gradient of the pedal reaction force in correspondence to the parameter. In this case, the gradient of the pedal reaction force means a displacement amount of the pedal reaction force with respect to the displacement amount of the pedal position, and is not necessarily defined in the case that the pedal position does not fluctuate.

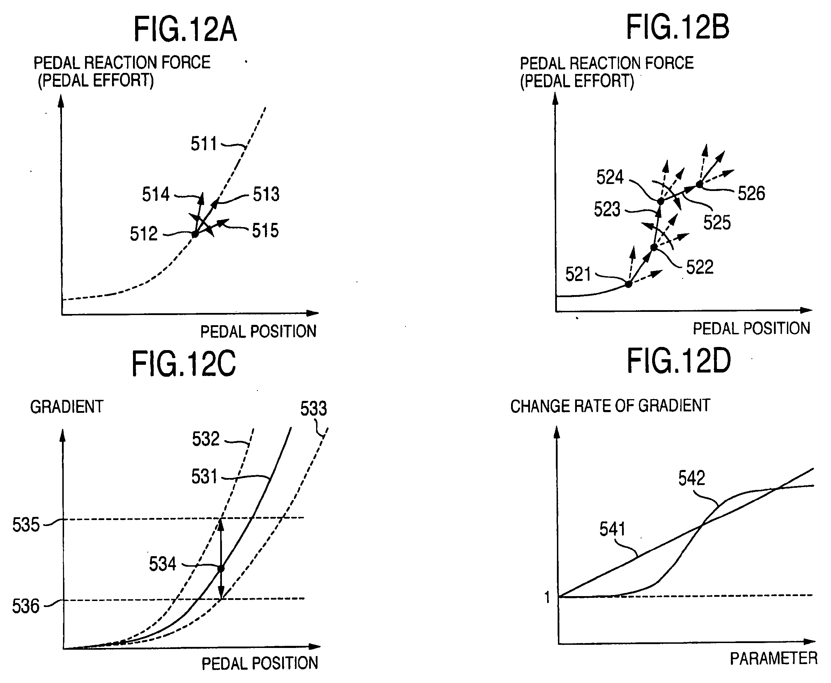

For example, as shown in Fig. 12A, when a relation between a standard pedal position and pedal reaction force (pedal effort) is shown by reference numeral 511, and the pedal position and the pedal reaction force (the pedal effort) at a certain time point adopt reference numeral 512, the gradient of the pedal reaction force (the pedal effort), or the displacement amount of the pedal reaction force (the pedal effort) with respect to the displacement amount of the pedal position is expressed by reference numeral 513 in the case that they do not depend on the parameter.

In the case of changing the gradient of the pedal reaction force (the pedal effort) on the basis of the parameter, it is possible to make the gradient of the pedal reaction force (the pedal effort) with respect to the pedal position large, for example, such as a gradient 514 on the basis of the parameter, and make the gradient small such as a gradient 515. In the gradients 513 to 515, since the pedal reaction force is differently changed in the case of moving the pedal position, the pedal reaction force does not change in the case that the pedal position does not change. Accordingly, the pedal does not arbitrarily move even if the parameter is changed, and the pedal reaction force corresponding to the parameter can be achieved only in the case that the pedal position is changed by the stepping.

Fig. 12B shows a change of the pedal reaction force (the pedal effort) in the case that the parameter continuously changes. For example, when the relation between the pedal position and the pedal reaction force (the pedal effort) changes from reference numeral 521 to reference numeral 522, if the parameter fluctuates and the gradient becomes large, the displacement of the pedal reaction force with respect to the displacement amount of the pedal position is achieved, for example, by using a gradient 523. As a result, the relation between the pedal position and the pedal reaction force (the pedal effort) becomes reference numeral 524. Further, if the gradient becomes small by the parameter in reference numeral 524, the displacement of the pedal reaction force with respect to the displacement amount of the pedal position is achieved, for example, by using a gradient 525. As a result, the relation between the pedal position and the pedal reaction force (the pedal effort) becomes reference numeral 526. In the case of changing the gradient of the pedal reaction force (the pedal) as shown in Fig. 12B, the relation of the pedal reaction force (the pedal effort) with respect to the pedal position always changes in accordance with the vehicle speed and the pedal stepping method, and does not draw a fixed curve as shown by reference numeral 511.

In other words, a gradient 531 of the pedal reaction force (the pedal effort) with respect to the pedal position is defined as shown in Fig. 12C, and the relation changes on the basis of the parameter, for example, as shown by reference numerals 532 and 533. Further, a gradient 534 at a certain time point changes on the basis of the parameter, for example, to reference numerals 535 and 536. In this case, reference numerals 535 and 536 can be determined by a product of the gradient 534 and a change rate of the gradient changing on the basis of the parameter.

In this case, if the standard gradient at a certain pedal position is set to Sfd, a gradient Sfr at that time point can be expressed as the following formula (4) by using a change rate Pfr of the gradient.

$$Sfr = Sfd \times Pfr \qquad (4)$$

The change rate Pfr of the gradient always fluctuates on the basis of the parameter, and adopts a value 0 to $\infty$. Since the change of the pedal reaction force with respect to the pedal position becomes 0 at a time when the change rate of the gradient is 0, the pedal reaction force undergoes a transition in parallel to a pedal position axis in a graph of the pedal reaction force with respect to the pedal position as shown in Fig. 11. Further, when the change rate of the gradient is $\infty$, the pedal reaction force becomes $\infty$ even if the pedal position does not change. Accordingly, the pedal reaction force undergoes a transition in parallel to the pedal reaction axis in the graph of the pedal reaction force with respect to the pedal position such as Fig. 11.

Further, the change rate of the gradient is expressed, for example, as shown in Fig. 12D, and the parameter and the change rate of the gradient may have a relation as shown by a straight line 541, or may have a relation as shown by a curve 542.

In this case, for example, if the standard incline is expressed by reference numeral 521 in Fig. 12B, the standard gradient 524 at a certain time point is multiplied by the change rate of the always changing gradient, and becomes, for example, a value such as a gradient 525 and a gradient 526.

A description will be given of a practical calculating method executed for achieving the pedal reaction force on the basis of the gradient. It is assumed that the pedal position at a certain time point is S2, a pedal position before one sampling is S1, a pedal effort is F1 and a pedal reaction force generated by the pedal system is F2. At this time, a relation expressed by the following formula (5) is established, and Kf corresponds to a coefficient expressing a relation between the displacement amount of the pedal position and the displacement amount of the pedal reaction force and equal to the gradient of the pedal reaction force in Fig. 12.

$$F2 - F1 = Kf \times (S2 - S1) \qquad (5)$$

The formula (6) is obtained by changing the formula (5).

$$F2 = F1 + Kf \times (S2 - S1) \qquad (6)$$

In this case, the following formula (7) is obtained by employing the change rate Pfr of the gradient in correspondence to the parameter.

$$F3 = F1 + Pfr \times Kf \times (S2 - S1) \qquad (7)$$

F3 corresponds to a pedal reaction force which the pedal system generated by reflecting the parameter. In the case that Pfr becomes large in accordance with the formula (7), the change rate of the pedal reaction force changing at a time of changing the pedal position becomes large. Further, since a relation S2 = S1 and F1 = F3 is established in the case that the pedal position does not change, the pedal reaction force does not change even if the parameter changes. Accordingly, neither the pedal arbitrarily moves in correspondence to the change of the parameter nor the uncomfortable feeling is generated in the operation. Further, a relation F1 = F3 is established even in the case that Pfr is 0, the same reaction force is continuously generated regardless of the pedal position.

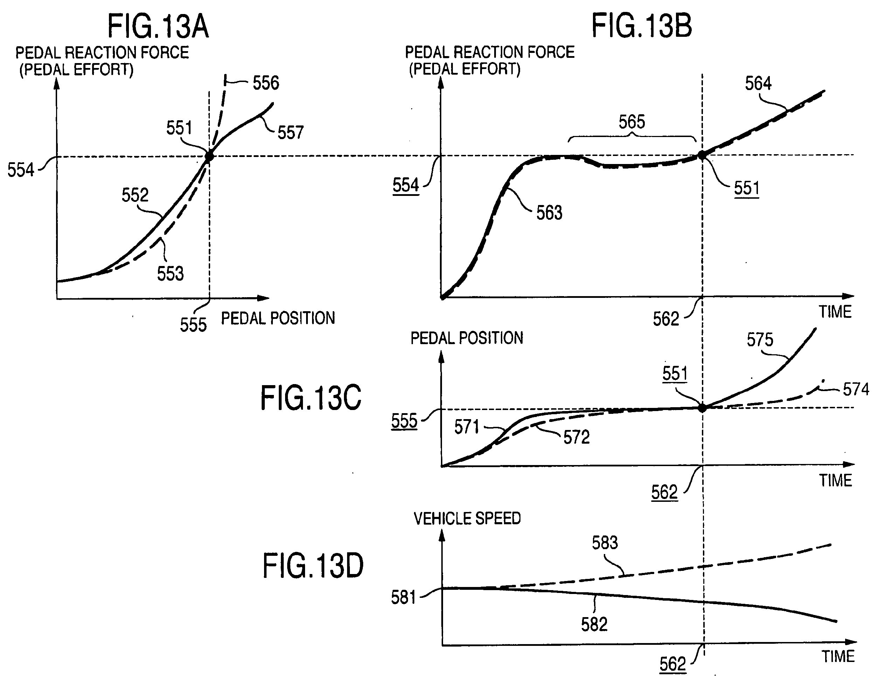

Fig. 13 shows a change of a pedal position and a pedal reaction force in the case of setting the parameter to the vehicle speed in connection with the brake pedal and the accelerator pedal. In Fig. 13, a solid line shows the brake pedal and a broken line shows the accelerator pedal. In this case, as shown in Fig. 13B, the pedal efforts are similar in the brake pedal and the accelerator pedal. Further, the pedals are stepped down to a pedal position 555 initially. A range 565 corresponds to a state in which the pedal is maintained without being moved while being stepped down, and the pedal position is maintained at the pedal position 555. Further, when the pedal position goes over a time point 562, the pedal effort is again increased, and the pedal position is traveled to the far side. In this case, it is assumed that the pedal reaction forces of the accelerator pedal and the brake pedal become both reference numeral 554, for example, at a time when the pedal position is at the pedal position 555.

Since the vehicle is accelerated by stepping down the accelerator pedal, the vehicle speed changes such as reference numeral 583. In the case of changing the change rate of the gradient by setting the vehicle speed a the parameter, the pedal position is maintained at the pedal position 555 during a time when the stepping of the pedal exists in a point 551. However, since the vehicle speed becomes larger during maintaining the pedal, the relation between the pedal position and the pedal reaction force can be achieved on the basis of the relation 556 in which the gradient is larger than the conventional relation 553, at time of stepping down on the basis of the pedal effort equal to or more than reference numeral 554, after the time point 562. Alternatively, the pedal position is reluctant to change even by increasing the pedal effort such as reference numeral 574. In other words, the pedal becomes stiff at a degree of acceleration on the basis of the further stepping.

Further, since the vehicle speed is decelerated by stepping down the brake pedal, the vehicle speed changes such as reference numeral 582. In the case of changing the change rate of the gradient by setting the vehicle speed a the parameter, the pedal position is maintained at the pedal position 555 during a time when the stepping of the pedal exists in the point 551. However, since the vehicle speed becomes smaller during maintaining the pedal, the relation between the pedal position and the pedal reaction force can be achieved on the basis of the relation 557 in which the gradient is smaller than the conventional relation 552, at time of stepping down on the basis of the pedal effort equal to or more than reference numeral 554, after the time point 562. Alternatively, the pedal position suddenly change such as reference numeral 575. In other words, the pedal becomes soft at a degree of deceleration on the basis of the further stepping.

Further, it is desirable to change the characteristic in correspondence to the operational information, the vehicle information and the environmental information, about the vehicle output. For example, it is effective that the greater vehicle output is easily output at a time when the vehicle speed is large. On the contrary, when the vehicle speed is small, it is possible to increase a resolution of the vehicle output with respect to the pedal operation by making the vehicle output small, and it is possible to easily execute a smooth and fine driving operation at a low speed time. Further, the driving operability of the vehicle can be secured by making the vehicle output larger at a certain degree at a time when the pedal reaction force is large, and making the vehicle output smaller at a time when the pedal reaction force is small.

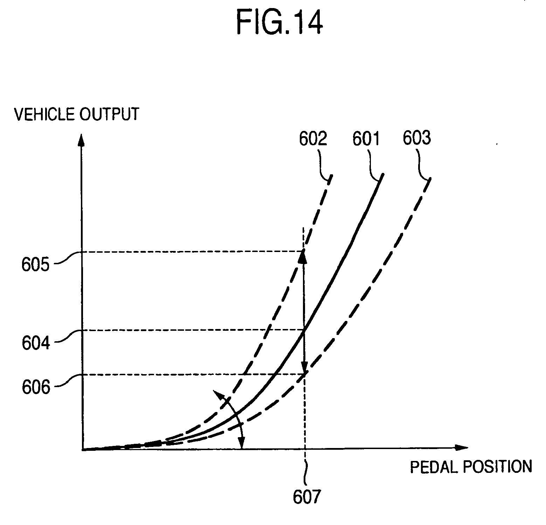

However, for example, in the case of changing a vehicle output 601 with respect to the pedal position to reference numeral 602 or 603 as shown in Fig. 14, there is a problem that the vehicle output changes from reference numeral 604 to reference numeral 605 or reference numeral 606 in spite that a pedal position 607 does not change. In the case that the vehicle output changes regardless of the pedal position, the motion of the vehicle changes regardless of the intention of the driver. Accordingly, it is hard to carry on the driving operation, the uncomfortable feeling is applied to the driver, and a danger is applied in some circumstances. Further, in some parameters changing the vehicle output, the vehicle output and the parameter form a positive feedback, a rapid acceleration and a rapid deceleration are generated, and an oscillating phenomenon is generated.

In this case, there is employed a method of changing the gradient of the vehicle output with respect to the pedal position in correspondence to the parameter. In this case, the gradient of the vehicle output with respect to the pedal position means a displacement amount of the vehicle output with respect to a displacement amount of the pedal position, and may not be defined in the case that the pedal position does not fluctuate.

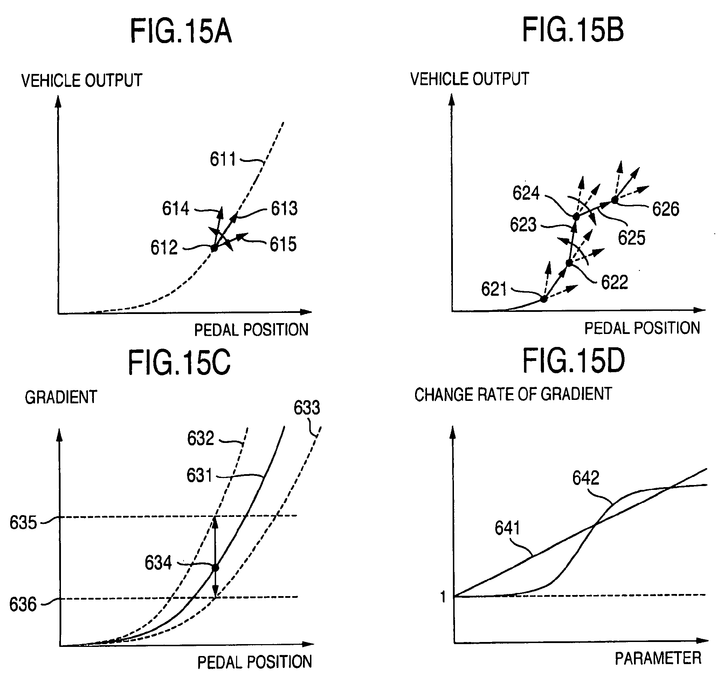

For example, as shown in Fig. 15, in the case that a relation between the standard pedal position and the vehicle output is shown by reference numeral 611, and a pedal position and a vehicle output at a certain time point correspond to reference numeral 612, a gradient in the case that it does not depend on the parameter is expressed by reference numeral 613. In this case, a gradient at a time of being larger on the basis of the parameter may be changed, for example, by reference numeral 614, and a gradient at a time of being smaller on the basis of the parameter may be changed as shown by reference numeral 615. In reference numeral 613 to reference numeral 615, since the change of the vehicle output in the case of moving the pedal position becomes different, the vehicle output does not change in the case that the pedal position does not change. Accordingly, the vehicle output does not arbitrarily fluctuate even if the parameter fluctuates, and the way of the vehicle output changes in correspondence to the parameter even in the case that the pedal position changes on the basis of the stepping.

Fig. 15B shows a change of the vehicle output in the case that the parameter continuously changes. For example, when the relation between the pedal position and the vehicle output changes from reference numeral 621 to reference numeral 622, if the gradient becomes larger on the basis of the parameter, the displacement of the vehicle output with respect to the displacement amount of the pedal position is achieved by using a gradient 623. As a result, the relation between the pedal position and the vehicle output becomes reference numeral 624. Further, if the gradient becomes smaller on the basis of the parameter in reference numeral 624, the displacement of the vehicle output with respect to the displacement amount of the pedal position is achieved by using a gradient 625. As a result, the relation between the pedal position and the vehicle output becomes reference numeral 626. In the case of changing the gradient of the vehicle output as shown in Fig. 15B, the relation of the vehicle output with respect to the pedal position always changes in accordance with the parameter and the stepping way of the pedal, and does not draw a fixed curve such as reference numeral 611 in Fig. 15A.

In other words, as shown in Fig. 15C, a relation 631 between the pedal position and the gradient of the vehicle output with respect to the pedal position is defined. The relation changes on the basis of the parameter, for example, such as reference numerals 632 and 633. Further, a gradient 634 at a certain time point changes on the basis of the parameter, for example, such as the gradients 635 and 636. In this case, the gradients 635 and 636 can be determined by a product of the gradient 634 and a change rate of the gradient changing on the basis of the parameter.

In this case, if the standard gradient at a certain pedal position is set to Sod, a gradient Sor at that time point can be expressed as the following formula (8) by using a change rate Por of the gradient.

$$Sor = Sod \times Por \qquad\qquad (8)$$

The change rate Por of the gradient always fluctuates on the basis of the parameter, and adopts a value 0 to $\infty$. Since the change of the vehicle output with respect to the pedal position becomes 0 at a time when the change rate of the gradient is 0, the vehicle output undergoes a transition in parallel to a pedal position axis in a graph of the vehicle output with respect to the pedal position as shown in Fig. 14. In other words, when Por is 0, the vehicle output does not change even by stepping down the pedal. Further, when the change rate of the gradient is $\infty$, the vehicle output becomes $\infty$ even if the pedal position does not change. Accordingly, the vehicle output undergoes a transition in parallel to the vehicle output axis in the graph of the vehicle output with respect to the pedal position such as Fig. 14.

Further, the change rate of the gradient is expressed, for example, as shown in Fig. 15D. The parameter and the change rate of the gradient may have a relation as shown by a straight line 641, or may have a relation as shown by a curve 642. In this case, for example, if the standard incline is expressed by reference numeral 631 in Fig. 15B, the standard gradient 634 at a certain time point is multiplied by the change rate of the always changing gradient, and becomes, for example, a value such as a gradient 635 and a gradient 636.

A description will be given of a practical calculating method executed for achieving the vehicle output on the basis of the gradient. It is assumed that the practical vehicle output at a certain time point is G1, and the vehicle output which the vehicle output system intends to generate is G2. At this time, a relation expressed by the following formula (9) is established, and Ko corresponds to a coefficient expressing a relation between the displacement amount of the pedal position and the displacement amount of the vehicle output and equal to the gradient of the vehicle output in Fig. 15.

$$G2 - G1 = Ko \times (S2 - S1) \qquad\qquad (9)$$

The formula (10) is obtained by modifying the formula (9).

$$G2 = G1 + Ko \times (S2 - S1) \qquad\qquad (10)$$

In this case, the formula (11) is obtained by employing the change rate Por of the gradient in correspondence to the parameter.

$$G3 = G1 + Por \times Ko \times (S2 - S1) \qquad (11)$$

G3 corresponds to a vehicle output which the pedal system generated by reflecting the parameter. In the case that Por becomes large in accordance with the formula (11), the change of the vehicle output changing at a time of changing the vehicle output becomes large. Further, since a relation S2 = S1 and G1 = G3 is established in the case that the pedal position does not change, the vehicle output does not change even if the parameter changes. In other words, neither the vehicle output arbitrarily moves nor the uncomfortable feeling is generated in the operation, in a state in which the pedal position is not moved. Further, a relation G1 = G3 is established even in the case that Pfr is 0, the same vehicle output is continuously generated regardless of the pedal position.

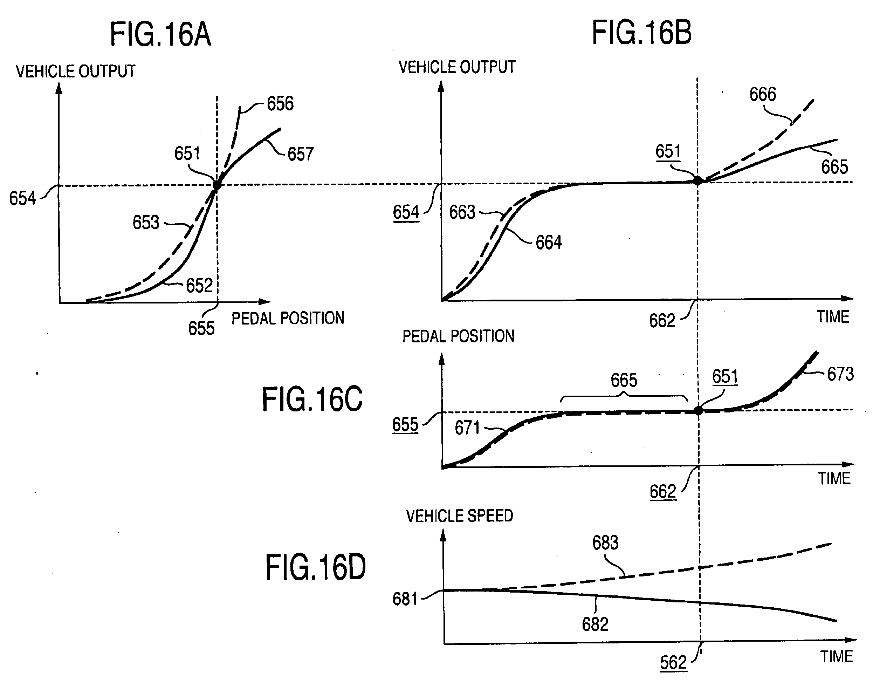

Fig. 16 shows a change of a pedal position and a vehicle output in the case of setting the parameter to the vehicle speed in connection with the brake pedal and the accelerator pedal. In Fig. 16, a solid line shows the brake pedal and a broken line shows the accelerator pedal. In this case, as shown in Fig. 16C, the pedal position are stepped down in the same manner in both of the brake pedal and the accelerator pedal. Further, the pedals are stepped down to a pedal position 655 initially. A range 665 corresponds to a state in which the pedal is maintained without being moved while being stepped down, and the pedal position is maintained at the pedal position 655. Further, when the pedal position goes over a time point 662, the pedal effort is again increased, and the pedal position is traveled to the far side. In this case, it is assumed that both the vehicle outputs of the driving output system and the braking output system become both reference numeral 654, for example, at a time when the pedal position is at the pedal position 655.

Since the vehicle is accelerated by stepping down the accelerator pedal, the vehicle speed changes such as reference numeral 683. In the case of changing the change rate of the gradient by setting the vehicle speed a the parameter, the vehicle output is maintained at reference numeral 654 during a time when the pedal position exists in the pedal position 655. However, since the vehicle speed becomes larger during maintaining the pedal, the relation between the pedal position and the vehicle output can be achieved on the basis of the relation 656 in which the gradient is larger than the conventional relation 653, at time when the pedal position becomes equal to or more than the pedal position 655, after the time point 662. Alternatively, the larger vehicle output is output such as reference numeral 666.

Further, since the vehicle speed is decelerated by stepping down the brake pedal, the vehicle speed changes such as reference numeral 682. Accordingly, since the vehicle speed becomes smaller during maintaining the pedal, the relation between the pedal position and the vehicle output can be achieved on the basis of the relation 657 in which the gradient is smaller than the conventional relation 652, at time when the pedal position becomes equal to or more than the pedal position 655, after the time point 662. Alternatively, the increase of the vehicle output is suppressed such as reference numeral 665.

It is possible to reflect the parameter on the basis of the operational information, the vehicle information and the environmental information on the pedal reaction force or the vehicle output in a state of stepping down the pedal or during the stepping without applying the uncomfortable feeling to the driver, by changing the gradient as shown in Figs. 12 and 15. However, it is impossible to apply the method of changing the gradient to the characteristic at the start of stepping such as the pedal reaction force at a time when the pedal position is 0, the minimum pedal position generating the vehicle output and the like. Further, in many cases, the feeling can be improved by making the gradient of the pedal reaction force (the pedal effort) and the vehicle output in the stepping start region, and there is a case that it is not proper to largely change the gradient of the start of stepping. However, in a step change of the pedal, a sudden stepping of the pedal, a fine operation of the vehicle output and the like, the characteristic of the start of stepping greatly affects the feeling of the driving operation, an easiness of the operation, a response of the vehicle motion with respect to the operational input, and the like.

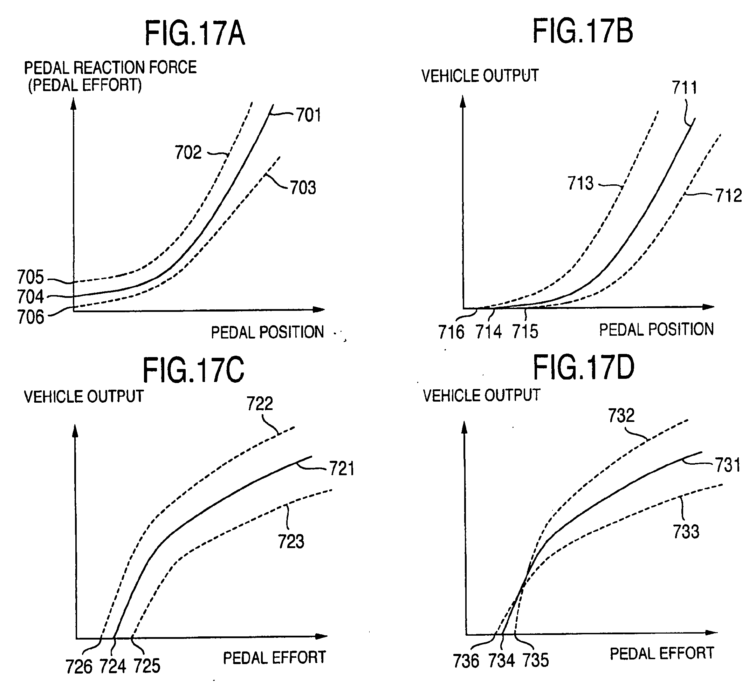

Accordingly, for example, as shown in Fig. 17, the pedal reaction force (the pedal effort) at a time when the pedal position is 0, and the minimum pedal position generating the vehicle output are changed.

Fig. 17A shows an example in which a characteristic 701 of the pedal reaction force (the pedal effort) changes on the basis of the parameter. A pedal reaction force (a pedal effort) 704 at a time when the pedal position is 0 is changed by the parameter together with the gradient so as to become reference numerals 705 and 706, whereby an entire of the characteristic of the pedal reaction force (the pedal effort) offsets so as to become reference numerals 702 and 703. In this case, the pedal reaction force (the pedal effort) at a time when the pedal position is 0 is a pedal reaction force corresponding to the minimum pedal effort necessary for moving the pedal position at a time of stepping down the pedal from a state in which the pedal is not stepped down, an offset amount of the pedal reaction force (the pedal effort), and a minimum ineffective pedal effort by which the pedal position does not travel. It is possible to enlarge the pedal reaction force at the start of stepping so as to achieve a stiff pedal by enlarging the pedal reaction force (the pedal effort) at a time when the pedal position is 0 such as reference numeral 705. Further, it is possible to achieve a pedal in which the start of stepping is soft, by making it small such as reference numeral 706.

Fig. 17B shows an example in which a characteristic 711 of the vehicle output changes on the basis of the parameter. A minimum pedal position 714 generating the vehicle output is changed by the parameter together with the gradient so as to become reference numerals 715 and 716, whereby an entire of the characteristic of the vehicle output offsets so as to become reference numerals 712 and 713. In this case, the minimum pedal position generating the vehicle output corresponds to a minimum pedal position necessary for outputting the vehicle output at a time of stepping down the pedal, an offset amount of the vehicle output, and a minimum ineffective stroke amount by which the vehicle output is not generated. It is possible to suppress a rising of the vehicle output with respect to the stepping by enlarging the minimum pedal position generating the vehicle output, and it is possible to stably operate the vehicle even with respect to the rapid operational input. Further, it is possible to quickly rise the vehicle output with respect to the stepping by making it small such as reference numeral 716, and it is possible to increase a response of the motion of the vehicle with respect to the operational input.

In Figs. 17A and 17B, the pedal reaction force (the pedal effort) with respect to the pedal position or the vehicle output is changed on the basis of the offset by the parameter. Accordingly, it is preferable to basically switch the characteristic at a timing when the operational input is not carried on.

Further, since the pedal position, the pedal reaction force (the pedal effort) and the vehicle output are set by Figs. 17A and 17B, the vehicle output with respect to the pedal reaction force (the pedal effort) is changed on the basis of the parameter as shown in Figs. 17C and 17D. In this case, whether a minimum pedal reaction force (pedal effort) 724 generating the vehicle output becomes larger such as reference numeral 725 or smaller such as reference numeral 716 depends on the pedal reaction force at a time when the pedal position is 0, the minimum pedal position generating the vehicle output, the characteristic of the pedal reaction force and the characteristic of the vehicle output. Further, in accordance with the setting of Figs. 17A and 17B, the characteristic may intersects in the process so as to come to a relation such as reference numerals 732 and 733 with respect to reference numeral 731, even if a minimum pedal reaction force (pedal effort) 734 generating the vehicle output is changed such as reference numerals 735 and 736, as shown in Fig. 17D.

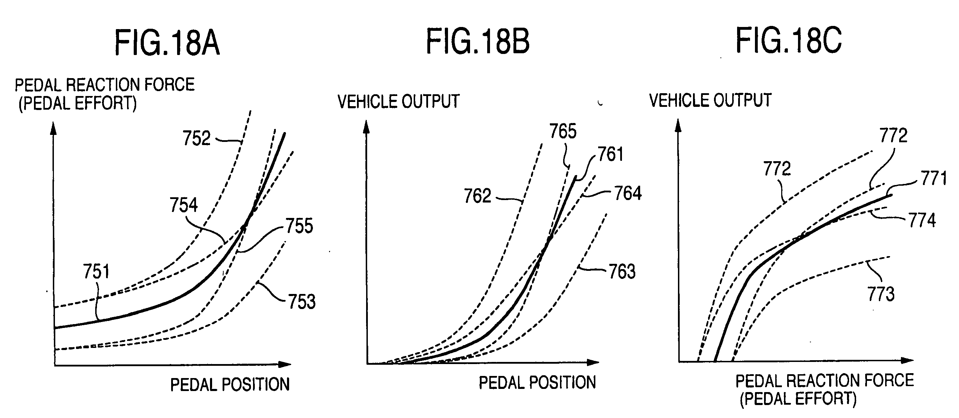

Fig. 18 shows an example obtained by combining the changes on the basis of the parameters of the gradient of the pedal reaction force (the pedal effort), the gradient of the vehicle output, the pedal reaction force at a time when the pedal position is 0 and the minimum pedal position generating the vehicle output.

Fig. 18A is a view showing a characteristic of the pedal reaction force (the pedal effort) with respect to the pedal position. Reference numerals 753 and 755 correspond to a case that the pedal reaction force at a time when the pedal position is 0 becomes larger by the parameter, with respect to a characteristic 751 in the case that it is not changed by the parameter, and reference numerals 752 and 754 correspond to a case that it becomes smaller. Further, reference numerals 752 and 755 correspond to a case that the gradient of the pedal reaction force (the pedal effort) becomes larger by the parameter in the middle of the stepping, and reference numerals 753 and 754 correspond to a case that the gradient becomes smaller.

Fig. 18B is a view showing a characteristic of the vehicle output with respect to the pedal position. Reference numerals 763 and 765 correspond to a case that the minimum pedal position generating the vehicle output becomes larger by the parameter, with respect to a characteristic 761 in the case that it is not changed by the parameter, and reference numerals 762 and 764 correspond to a case that it becomes smaller. Further, reference numerals 762 and 765 correspond to a case that the gradient of the vehicle output becomes larger by the parameter in the middle of the stepping, and reference numerals 763 and 764 correspond to a case that the gradient becomes smaller.

Fig. 18C is a view showing a characteristic of the vehicle output with respect to the pedal reaction force (the pedal effort). Since the gradient of the pedal reaction force (the pedal effort), the gradient of the vehicle output, the pedal reaction force at a time when the pedal position is 0 and the minimum pedal position generating the vehicle output are changed as shown in Figs. 18A and 18B, the characteristic changes such as reference numerals 772, 773, 774 and 775 with respect to a characteristic 771 in the case that it is not changed by the parameter.

Next, a description will be given of how the gradient of the pedal reaction force (the pedal effort), the gradient of the vehicle output, the pedal reaction force at a time when the pedal position is 0 and the minimum pedal position generating the vehicle output are changed by the parameters such as the vehicle information, the operational information, the environmental information and the like.

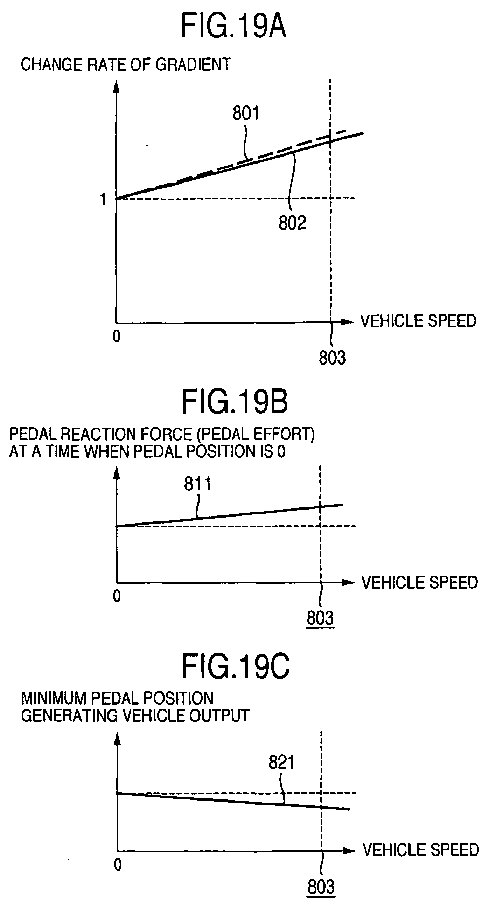

In Fig. 19A to Fig. 25A, a solid line shows a change rate of the gradient of the pedal reaction force (the pedal effort), and a broken line shows a change rate of the gradient of the vehicle output. In this case, it is possible to employ the vehicle speed as the parameter and change the changer rates of the gradients of the pedal reaction force (the pedal effort) and the vehicle output, the pedal reaction force (the pedal effort) at a time when the pedal position is 0, and the minimum pedal position generating the vehicle output in accordance with the vehicle speed. The vehicle speed can be detected by a vehicle information detecting means.

Fig. 19 shows an example in the case of changing the characteristics of the pedal reaction force (the pedal effort) and the vehicle output in correspondence to the vehicle speed. When the vehicle speed is high, a kinetic energy of the vehicle is in a large state, and the vehicle motion is more easily operated in the case that the vehicle output with respect to the operational input is large. Further, when the vehicle speed is low, a fine driving operation is required in many cases, so that it is preferable to make the vehicle output small at a certain degree for increasing a resolution of the vehicle output with respect to the operational input.

Accordingly, for example, as shown by reference numeral 801 in Fig. 19A, it is possible to make the gradient of the vehicle output larger in accordance that the vehicle speed is larger, thereby setting such that the larger vehicle output is generated with respect to the operational input. Further, in the case that the vehicle output is large, the operability can be kept by enlarging the pedal reaction force in the same manner. Accordingly, the gradient of the pedal reaction force (the pedal effort) can be changed by using a gradient 802. Since the pedal becomes stiff by using the gradient such as the gradient 802, the pedal effort can be easily increased at a time of stepping in correspondence to the increase of the vehicle speed, and it is possible to obtain a pedal characteristic having a stable stepping response. Further, since the pedal becomes soft at a time when the vehicle speed is low, it is easy to smoothly change the pedal position, and it is possible to easily carry on a fine driving operation.

Further, for example, the pedal reaction force (the pedal effort) at a time when the pedal position is 0 can be changed as shown by reference numeral 811 in Fig. 19B. Since the offset amount of the pedal reaction force becomes larger in correspondence to the vehicle speed, it is possible to  achieve a pedal characteristic having a stiff and steady stepping response even at the start of stepping.

Further, the minimum pedal position generating the vehicle output can be changed as shown by reference numeral 821 in Fig. 19C. Since the offset amount of the vehicle output becomes smaller in correspondence to the vehicle speed, a rising of the vehicle output at the start of stepping becomes quick, and the higher speed the vehicle travels, the quicker the response of the vehicle motion with respect to the operational input can be.

In this case, an example in which each of threshold values in Fig. 19 is specifically set is shown. Since the characteristics of the pedal and the vehicle output are different in accordance with a surrounding environment, a kind of the vehicle and an intended use, each of the threshold values in Fig. 19 is not necessarily limited to the example shown here. For example, assuming that the change rate of the gradient at a time when the vehicle speed is 0 is 1, the change rate of the gradient in a threshold value 803 may be, for example, about 2. Further, for example, in the case that the pedal reaction force (the pedal effort) at a time when the pedal position at the vehicle speed 0 is 0 is about 10 N in the accelerator pedal, and about 20 N in the brake pedal, it may be, for example, about 20 N in the accelerator pedal and about 30 N in the brake pedal, in a threshold value  803. Further, the minimum pedal position generating the vehicle output may be about 0.005 m in the accelerator pedal and about 0.01 m in the brake pedal, for example, at a time when the vehicle speed is 0, and may be about 0.01 m in the accelerator pedal and about 0.02 m in the brake pedal at a tie when the vehicle speed is the threshold value 803. In this case, the threshold value 803 may be set, for example, to about 100 km/h.

It is possible to employ how much the vehicle travels while turning as the parameter, so as to change the change rates of the gradients of the pedal reaction force (the pedal effort) and the vehicle output, the pedal reaction force (the pedal effort) at a time when the pedal position is 0, and the minimum pedal position generating the vehicle output in correspondence to a curve state. In this case, the curve state corresponds to any one of an angular velocity of the vehicle, an angular acceleration of the vehicle, a lateral acceleration, a yaw rate, a steering angle, a steering angular velocity and a curvature of the traveling road detected by the vehicle information detecting means and the environmental information detecting means, or a combination of some of them, and shows how much the vehicle travels while turning.

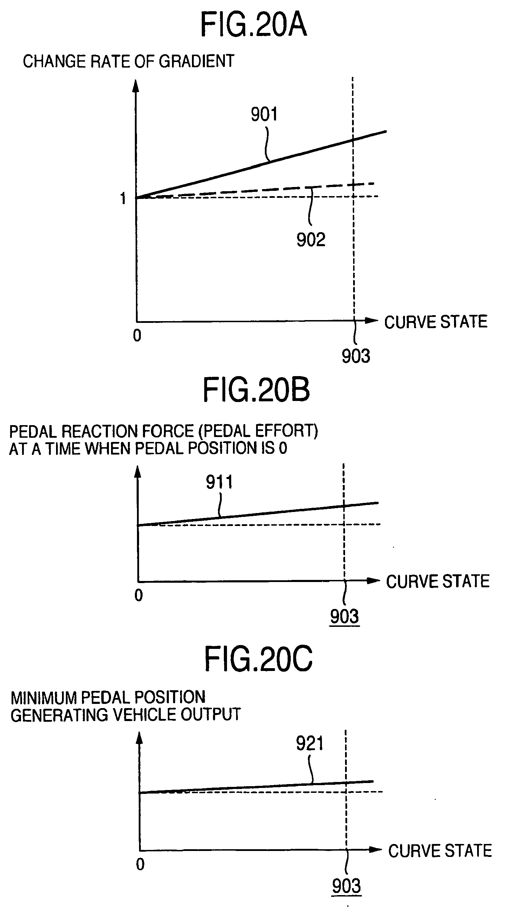

Fig. 20 shows an example in the case of changing the characteristics of the pedal reaction force (the pedal effort) the vehicle output in  correspondence to the curve state.

When the curve state is large, that is, the vehicle travels while turning largely, a lateral force is applied to the driver due to a centrifugal force. Accordingly, the driving operation is hard to be carried on. Further, if the rapid accelerating operation or decelerating operation is carried on in the middle of the curve, a stability of traveling is deteriorated, and there is a risk that a spin or the like is generated. Accordingly, it is possible to change the change rate of the gradient of the pedal reaction force (the pedal effort) as shown by reference numeral 901 in Fig. 20A, for example, in correspondence to the curve state. In reference numeral 901, since the pedal becomes stiff in the larger curving, it is possible to obtain a steady stepping response, and it is possible to carry on a stable driving operation while supporting the balance even if the lateral force is applied. Further, the vehicle output becomes hardly large even in the case that the balance is supported by stepping down the pedal, by setting the change rate of the gradient of the vehicle output such as reference numeral 902, and it is possible to prevent the rapid accelerating or decelerating operation.

Further, it is possible to make the pedal stiff from the start of stepping so as to easily carry on the stable driving operation by setting the pedal reaction force (the pedal effort) at a time when the  pedal position is 0 as shown by reference numeral 911 in Fig. 20B, for example, in correspondence to the curve state. Further, it is possible to suppress the rising of the vehicle output with respect to the stepping so as to prevent the rapid accelerating and decelerating operation from being generated, for example, by setting the minimum pedal position generating the vehicle output such as reference numeral 921 in Fig. 20C.

In this case, there is shown an example in which each of threshold values in Fig. 20 is specifically set. Since the characteristics of the pedal and the vehicle output are different in correspondence to the surrounding environment and the kind and the intended use of the vehicle, each of the threshold values in Fig. 20 is not necessarily limited to the example shown here. For example, assuming that the curve state is shown by the steering angle, the change rate of the gradient, for example, at a time when the steering angle is 0 may be 1, and the change rate of the gradient at a time of the threshold value 903 may be, for example, about 3. Further, the pedal reaction force (the pedal effort) at a time when the steering angle is 0 and the pedal position is 0 is, for example, about 20 N in the brake pedal, and is about 10 N in the accelerator pedal. On the contrary, the pedal reaction force at a time when the steering angle is the threshold value 903 may be, for example, about 40 N in  the brake pedal, and may be about 25 N in the accelerator pedal. Further, the minimum pedal position generating the vehicle output is, for example, about 0.01 in the brake pedal, and is about 0.005 m in the accelerator pedal, at a time when the steering angle is 0. On the contrary, when the steering angle is the threshold value 903, it may be, for example, about in the brake pedal, and may be about 0.01 m in the accelerator pedal. The threshold value 903 may be set, for example, to 60 degree or -60 degree. In this case, since the magnitude of the curve state is important, it is preferable to consider an absolute value thereof at a time of taking the threshold value into consideration.

It is possible to use the pedal velocity as the parameter so as to change the change rates of the gradients of the pedal reaction force (the pedal effort) and the vehicle output, the pedal reaction force (the pedal effort) at a time when the pedal position is 0, and the minimum pedal position generating the vehicle output in correspondence to the pedal velocity. The pedal velocity can be detected by the operational information detecting means.

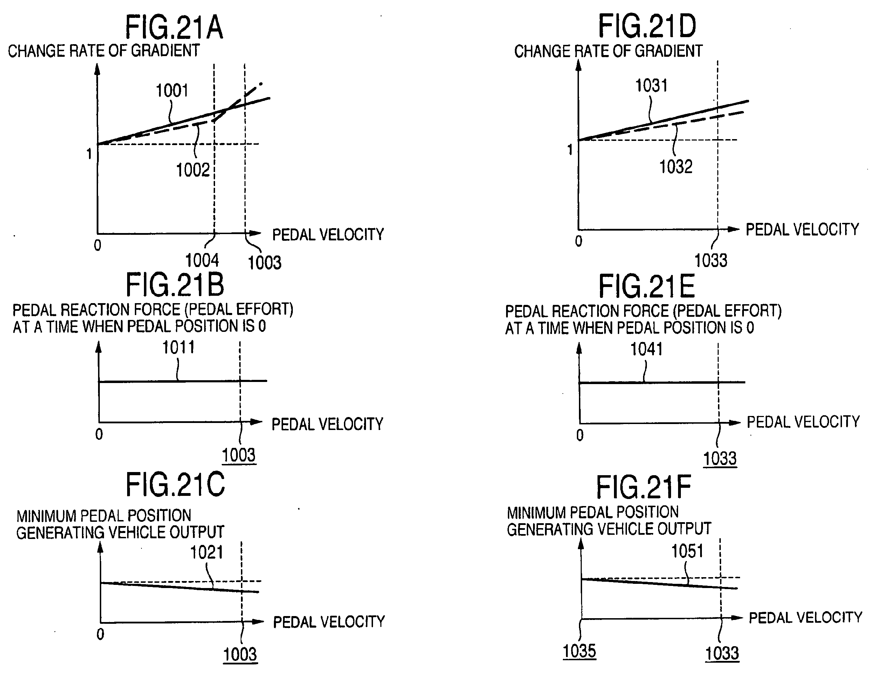

Fig. 21 shows an example in the case of changing the characteristics of the pedal reaction force (the pedal effort) and the vehicle output in correspondence to the pedal velocity.

Figs. 21A, 21B and 21C are views showing the brake pedal and the braking output system. In the case that the pedal velocity is high, it can be said that it corresponds to a state in which the operational input is fast, and the driver carries on the rapid driving operation. Accordingly, it is possible to early apply a great braking in accordance with an earlier stepping of the pedal, by changing the change rate of the gradient of the vehicle output, for example, to reference numeral 1002 in correspondence to the pedal velocity. In this case, reference numeral 1002 may be set such that the change rate of the gradient becomes larger if the pedal velocity goes over a threshold value 1004, whereby a greater braking tends to be applied. Further, the change rate of the gradient of the pedal reaction force (the pedal effort) may be changed such as reference numeral 1001. A pedal feeling in correspondence to the change of the vehicle output can be obtained by changing the change rate of the gradient of the pedal reaction force (the pedal effort) in correspondence to the pedal velocity, and the stepping response is increased by the pedal becoming stiff, so that the great pedal effort can be easily generated.

In this case, as shown by reference numeral 1011 in Fig. 21B, the pedal reaction force (the pedal effort) at a time when the pedal position is 0 may not be changed in correspondence to the pedal velocity. Further, in order to improve the response of the rising of the vehicle output at a time of fast stepping, the minimum pedal position generating the vehicle output may be set as shown by reference numeral 1021 in Fig. 21C.

Figs. 21D, 21E and 21F are views showing the accelerator pedal and the driving output system. In the case that the pedal velocity is high, it can be said that it corresponds to a state in which the driver carries on the rapid driving operation, in the case of the accelerator pedal. Accordingly, it is possible to change the change rate of the gradient of the vehicle output, for example, to reference numeral 1032 in Fig. 21D in correspondence to the pedal velocity. In reference numeral 1032, it is possible to quickly apply the greater braking in accordance that the pedal is faster stepped. Further, the change rate of the gradient of the pedal reaction force (the pedal effort) may be changed such as reference numeral 1031. A pedal feeling in correspondence to the change of the vehicle output can be obtained by changing the change rate of the gradient of the pedal reaction force (the pedal effort) in correspondence to the pedal velocity, and the stepping response is increased by the pedal becoming stiff, so that the great pedal effort can be generated so as to easily step the pedal.

In this case, as shown by reference numeral 1041 in Fig. 21E, the pedal reaction force (the pedal effort) at a time when the pedal position is 0 may not be changed in correspondence to the pedal velocity. Further, in order to further improve the response of the rising of the vehicle output at a time of fast stepping, the minimum pedal position generating the vehicle output may change such as reference numeral 1051 in Fig. 21F.

In this case, an example in which each of threshold values in Fig. 21 is specifically set is shown. Since the characteristics of the pedal and the vehicle output are different in accordance with a surrounding environment, a kind of the vehicle and an intended use, each of the threshold values in Fig. 21 is not necessarily limited to the example shown here. For example, assuming that the change rate of the gradient at a time when the pedal velocity is 0 is 1, the change rate of the gradient of the pedal reaction force (the pedal effort), for example, in Fig. 21A may be about 2 in a threshold value 1003, and the change rate of the gradient of the vehicle output may be about 1.7 in a threshold value 1004, and may be about 3 in the threshold value 1003. Further, for example, the change rate of the gradient of the pedal reaction force (the pedal effort) in Fig. 21D may be about 2 in a threshold value 1033, and the change rate of the gradient of the vehicle output may be about 1.8 in the threshold value 1033.

Further, the minimum pedal position generating the vehicle output is about 0.01 m, for example, at a time when the pedal speed is 0 in Fig. 21C, and is about 0.005 m in the threshold value 1003, and for example, in Fig. 21F, it may be about 0.005 m at a time when the pedal velocity is 0, and may be about 0.002 m in the threshold value 1033. Further, the threshold value 1003 or 1033 may be set about 0.5 m/s, for example, in the pedal end.

It is possible to employ a relative relation with a forward going vehicle or a forward obstacle as the parameter so as to change the change rates of the gradients of the pedal reaction force (the pedal effort) and the vehicle output, the pedal reaction force (the pedal effort) at a time when the pedal position is 0, and the minimum pedal position generating the vehicle output in correspondence to the relative relation with the forward going vehicle or the forward obstacle. In this case, the relative relation can employ a relative distance or a collision time detected by the vehicle information detecting means.

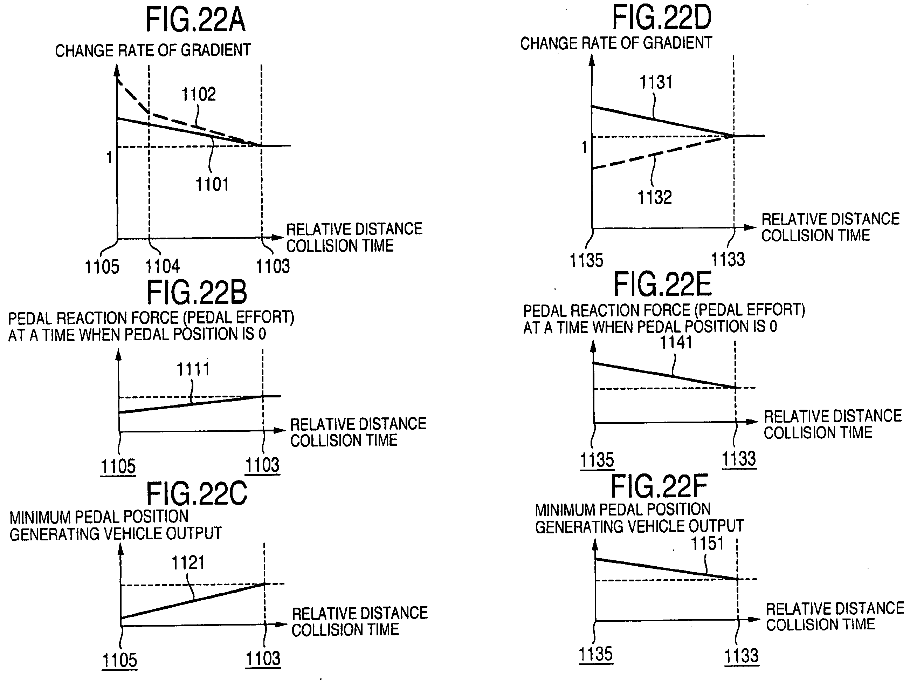

Fig. 22 shows an example in the case of changing the characteristics of the pedal reaction force (the pedal effort) the vehicle output in correspondence to the relative distance or the collision time.

Fig. 22A, 22B and 22C are views showing brake pedal and a braking output apparatus. In the case that the relative distance or the collision time is small, it can be said that the vehicle comes close to the forward going vehicle or the forward obstacle and there is generated a state in which a risk of collision is considered. Accordingly, it is possible to apply the greater brake in accordance that the vehicle comes closer to the forward going vehicle or the forward obstacle, by changing the change rate of the gradient of the vehicle output in correspondence to the relative distance or the collision time, for example, as shown by reference numeral 1102 in Fig. 22A. Further, the change rate of the gradient may be set as shown by reference numeral 1102 such that the change rate of the gradient becomes larger if the relative distance or the collision time becomes lower than a threshold value 1104, whereby a greater brake tends to be applied.

Further, the change rate of the gradient of the pedal reaction force (the pedal effort) may be changed as shown by reference numeral 1101. A pedal feeling in correspondence to the change of the vehicle output can be obtained by changing the change rate of the gradient of the pedal reaction force (the pedal effort) in correspondence to the relative distance or the collision time, and the driver can perceive the information by the pedal becoming stiff.

Further, it is possible to change the pedal reaction force (the pedal effort) at a time when the pedal position is 0 in correspondence to the relative distance or the collision time, for example, as shown by reference numeral 1111 in Fig. 22B. In the case of using reference numeral 1111, since the pedal reaction force (the pedal effort) at a time when the pedal position is 0 becomes smaller in accordance that the relative distance or the collision time becomes smaller, it is possible to obtain a pedal characteristic of easily stepping down deeply at a time of carrying on the rapid stepping. Further, in order to more quickly rise the vehicle output at a time of emergency, the minimum pedal position generating the vehicle output may be changed such as reference numeral 1121 in Fig. 22C.

Figs. 22D, 22E and 22F are views showing the accelerator pedal and the driving output system. In the case of moving close to the forward going vehicle or the forward obstacle, there can be considered a method of suppressing the vehicle output for driving at a certain degree so as to reduce a risk of the collision. Accordingly, it is possible to prevent the vehicle from being driven in accordance with being closer to the forward going vehicle or the forward obstacle, by changing the change rate of the gradient of the vehicle output in correspondence to the relative distance or the collision time, for example, as shown by reference numeral 1132 in Fig. 22D.

Further, the pedal characteristic hard to be stepped may be achieved by changing the change rate of the gradient of the pedal reaction force (the pedal effort) such as reference numeral 1131. In the case of using reference numeral 1131, since the pedal becomes stiff in correspondence to the relative distance or the collision time, the driver can perceive the information.

Further, the pedal reaction force (the pedal effort) at a time when the pedal position is 0 can make the pedal stiff, for example, by being changed such as reference numeral 1141 in Fig. 22E. It is possible to obtain a pedal characteristic that the pedal is hard to be stepped at the start of stepping in accordance that the relative distance or the collision time becomes small, by using reference numeral 1141, and it is possible to prevent the rapid acceleration from being generated, for example, even at a time of erroneously stepping for the brake pedal at an instant time. Further, in order to suppress the rapid acceleration caused by the erroneous stepping in an emergency or the like, the minimum pedal position generating the vehicle output may be structured such as to change such as reference numeral 1151 in Fig. 22F.

In this case, there is shown an example in which each of the threshold values in Fig. 22 is specifically set. Since the characteristics of the pedal and the vehicle output are different in accordance with the surrounding environment, and the kind and the intended use of the vehicle, each of the threshold values in Fig. 22 is not necessarily limited to the example shown here. For example, assuming that the change rate of the gradient at a time of being equal to or more than the threshold value 1103 or the threshold value 1133 is 1, the change rate of the gradient of the pedal reaction force (the pedal effort) in Fig. 22A at a time of the threshold value 1104 may be about 1.7, the change rate of the gradient of the vehicle output may be about 1.8, the change rate of the gradient of the pedal reaction force (the pedal effort) in Fig. 22A at a time of the threshold value 1105 may be about 2 and the change rate of the gradient of the vehicle output may be about 3. In Fig. 22D, the change rate of the gradient of the pedal reaction force (the pedal effort) at a time of the threshold value 1135 may be about 2, and the change rate of the gradient of the vehicle output may be about 0.5. In this case, the threshold value 1103 and 1133 may be set, for example, to a time when the relative distance is equal to or more than 20 m or the collision time is equal to or more than 3 second, the threshold value 1104 may be set to a time when the relative distance is 7 m or the collision time is 1 second, and the threshold values 1105 and 1135 may be set to a time when the relative distance and the collision time are 0. Further, the pedal reaction force (the pedal effort) at a time when the pedal position is 0 may be about 20 N in the threshold value 1103 in Fig. 22B, may be about 10 N at a time of being equal to or more than the threshold value 1133 in Fig. 22E, may be about 15 N at a time of the threshold value 1105 in Fig. 22B, and may be about 17 N at a time of the threshold value 1135 in Fig. 22E. Further, assuming that the minimum pedal position generating the vehicle output is about 0.01 in the threshold value 1103, for example, in Fig.

22C, and is about 0.005 m at a time of the threshold value 1133 in Fig. 22F, it may be set to 0.02 m in the threshold value 1105 in Fig. 22C, and may be set to 0.015 in the threshold value 1135 in Fig. 22F.

It is also possible to use a vehicle weight or a load amount as the parameter so as to change the change rates of the gradients of the pedal reaction force (the pedal effort) and the vehicle output, the pedal reaction force (the pedal effort) at a time when the pedal position is 0, and the minimum pedal position generating the vehicle output in correspondence to the vehicle weight or the load amount. The vehicle weight or the load amount can be detected or estimated by the vehicle information detecting means.

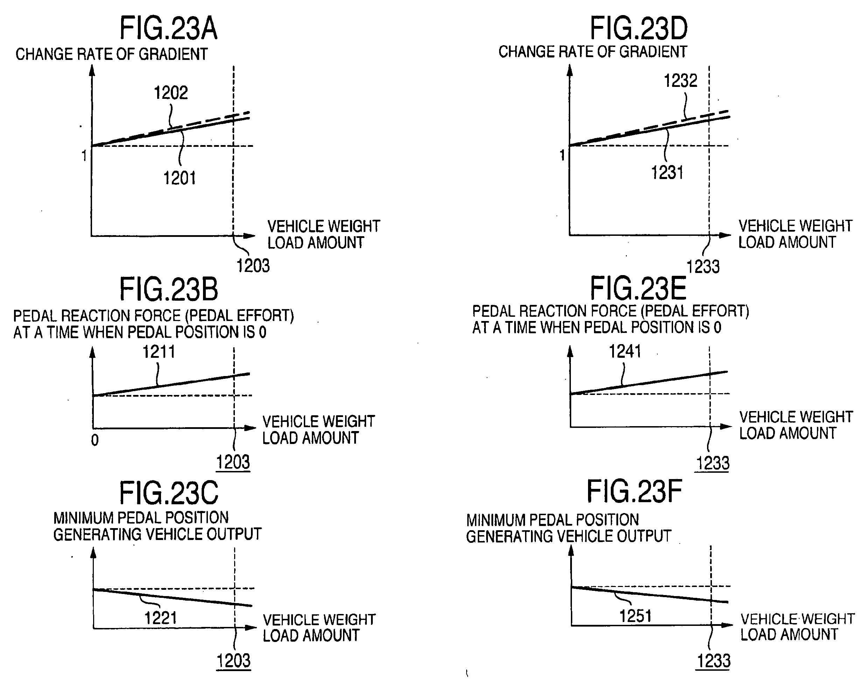

Fig. 23 shows an example in the case of changing the characteristics of the pedal reaction force (the pedal effort) and the vehicle output in correspondence to the vehicle weight or the load amount.

Figs. 23A, 23B and 23C are views showing the brake pedal and the braking output system. In the case that the vehicle weight or the load amount is large, an inertia force of the vehicle with respect to the vehicle output becomes larger. Accordingly, it is said that the braking is hard to be applied to the operational input. Therefore, it is possible to easily apply the brake to the operational input even if the vehicle weight or the load amount becomes larger, by changing the change rate of the gradient of the vehicle output such as reference numeral 1202 in correspondence to the vehicle weight or the load amount.

Further, the change rate of the gradient of the pedal reaction force (the pedal effort) may be changed as shown by reference numeral 1201. A pedal feeling in correspondence to the change of the vehicle output can be obtained by changing the change rate of the gradient of the pedal reaction force (the pedal effort) in correspondence to the vehicle weight or the load amount, and the driver can perceive the information by the pedal becoming stiff.

Further, it is possible to make the pedal stiff by changing the pedal reaction force (the pedal effort) at a time when the pedal position is 0 in correspondence to the vehicle weight or the load amount such as reference numeral 1211. Further, in the case that the vehicle weight or the load amount is large, a stop distance becomes longer. Accordingly, in order to output the vehicle output faster, the minimum pedal position generating the vehicle output may be changed as shown by reference numeral 1221.

Figs. 23D, 23E and 23F are views showing the accelerator pedal and the driving output system. In the case that the vehicle weight or the load amount is great, an inertia force with respect to the vehicle output becomes large. Accordingly, it can be said to be a state of being hard to be driven with respect to the operational input. Accordingly, it is possible to easily carry on the driving with respect to the operational input even if the vehicle weight or the load amount becomes large, by changing the change rate of the gradient of the vehicle output such as reference numeral 1232 in correspondence to the vehicle weight or the load amount.

Further, the change rate of the gradient of the pedal reaction force (the pedal effort) may be changed such as reference numeral 1231. It is possible to obtain a pedal feeling in correspondence to change of the vehicle output by changing the change rate of the gradient of the pedal reaction force (the pedal effort) in correspondence to the vehicle weight or the load amount, and since the pedal becomes stiff, the driver can perceive the information.

Further, it is possible to make the pedal stiff by changing the pedal reaction force (the pedal effort) at a time when the pedal position is 0 in correspondence to the vehicle weight or the load amount such as reference numeral 1241. Further, in the case that the vehicle weight is large, an accelerating time for reaching the same vehicle speed becomes longer. Accordingly, in order to more quickly generate the vehicle output, the minimum pedal position generating the vehicle output may be changed such as reference numeral 1251.

In this case, there is shown an example in which each of the threshold values in Fig. 23 is specifically set. Since the characteristics of the pedal and the vehicle output are different in accordance with the surrounding environment, and the kind and the intended use of the vehicle, each of the threshold values in Fig. 23 is not necessarily limited to the example shown here. For example, assuming that the change rate of the gradient at a time when the load amount is 0 is 1, the change rate of the gradient of the vehicle output at a time when the load amount is 100% may be about 2, and the change rate of the gradient of the pedal reaction force (the pedal effort) may be about 1.8. Further, the pedal reaction force (the pedal effort) at a time when the pedal position is 0 may be about 20 N at a time when the load amount is 0, and may be about 30 N at a time when the load amount is 100%. Further, the minimum pedal position generating the vehicle output may be about 0.01 m at a time when the load amount is 0, and may be about 0.005 m at a time when the load amount is 100%.

In this case, it is possible to use a gradient of a traveling road as the parameter so as to change the change rates of the gradients of the pedal reaction force (the pedal effort) and the vehicle output, the pedal reaction force (the pedal effort) at a time when the pedal position is 0, and the minimum pedal position generating the vehicle output in correspondence to the gradient of the traveling road. The gradient of the traveling road can be detected by the environmental information detecting means.

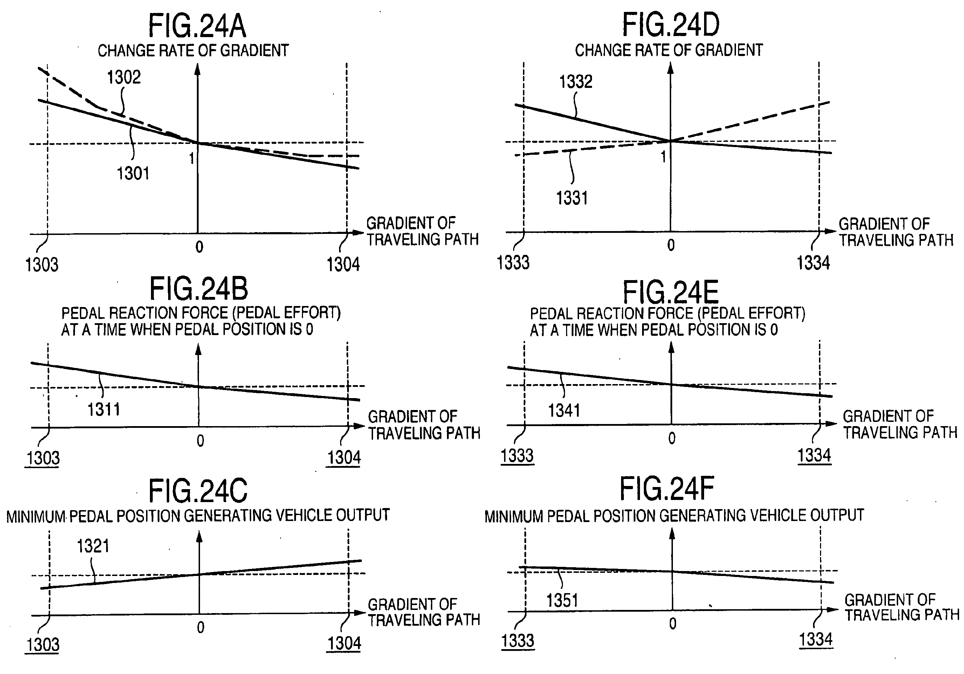

Fig. 24 shows an example in the case of changing the characteristics of the pedal reaction force (the pedal effort9 and the vehicle output in correspondence to the gradient of the traveling road.

Figs. 24A, 24B and 24C are views showing the brake pedal and the braking output system. In the case that the gradient of the traveling road is negative, the traveling road corresponds to a downward slope, and the vehicle is affected in an accelerating side by the gravity. Accordingly, it is desirable to make it easy to carry on the braking operation in which the braking force is further increased. Further, since the gravity is applied to a decelerating side in the case that the gradient of the traveling road is positive, the vehicle output of the braking output system may be made smaller at a certain degree.

Accordingly, for example, the change rate of the gradient of the vehicle output may be changed such as reference numeral 1302, the greater vehicle output may be easily output in the downward slope, and the vehicle output may be set such as to be suppressed at a certain degree in the upward slope. Further, in order to secure a feeling and an operability, it is possible to set such that the pedal reaction force (the pedal effort) is enlarged at a time when the gradient of the traveling road is negative in the same manner as both the outputs, and the pedal reaction force is made small at a time when the gradient of the traveling road is positive. Further, it is possible to obtain an effect that the stepping response capable of standing against the influence of the gravity can be obtained by making the pedal stiff in the downward slope. Further, the pedal reaction force (the pedal effort) can be changed such as reference numeral 1301.

Further, the pedal reaction force (the pedal effort) at a time when the pedal position is 0 may be changed such as reference numeral 1311, or the minimum pedal position generating the vehicle output may be changed such as reference numeral 1321. It is possible to output the stepping response in the downward slope, by changing an offset amount such as reference numerals 1311 and 1321, the rising of the vehicle output with respect to the pedal position becomes faster, and it is possible to carry on the decelerating motion having a better response.

In this case, there is shown an example in which each of the threshold values in Figs. 24A, 24B and 24C is specifically set. Since the characteristics of the pedal and the vehicle output are different in accordance with the surrounding environment, and the kind and the intended use of the vehicle, each of the threshold values in Figs. 24A, 24B and 24C is not necessarily limited to the example shown here. For example, the change rate of the gradient of the pedal reaction force (the pedal effort) may be set to about 0.9 at a time when the gradient is a threshold value 1304, and may be set to about 1.5 at a time when the gradient of the traveling road is a threshold value 1303. In this case, the change rate of the gradient of the vehicle output may be set to about 0.95 at a time of a threshold value 1304, and may be set to about 2 at a time when the gradient of the traveling road is a threshold value 1303. In this case, the threshold value 1303 may be set to about -15, and the threshold value 1304 may be set to about 15.

Further, for example, the line 1311 may be 20 N at a time when the gradient of the traveling road is 0, may be 30 N in the threshold value 1303, and may be 15 N in the threshold value 1304. For example, the line 1321 may be 0.01 m at a time when the gradient of the traveling road is 0, may be 0.005 m in the threshold value 1303, and may be 0.015 m in the threshold value 1304.

Figs. 24D, 24E and 24F are views showing the accelerator pedal and the driving output system. It is possible to easily carry on the vehicle operation by suppressing the driving force in the case that the gradient of the traveling road is negative, and by assisting the driving force in the case that the gradient of the traveling road is positive. Accordingly, for example, the change rate of the gradient of the driving force can be changed such as reference numeral 1332. Further, since it is desirable to apply such a stepping response as to stand against the influence of the gravity in the downward slope, and it is desirable to easily carry on the stepping against the influence of the gravity in the upward slope, the change rate of the gradient of the pedal reaction force (the pedal effort) may be changed such as reference numeral 1331, for example.

Further, the pedal reaction force (the pedal effort) at a time when the pedal position is 0 may be changed such as reference numeral 1341, and the minimum pedal position generating the vehicle output may be changed such as reference numeral 1351. It is possible to generate the stepping response in the downward slope by changing the offset amount such as reference numerals 1341 and 1351, and it is possible to make the rising of the vehicle output with respect to the pedal position slower than a case having a gentle slope, so that it is possible to carry on an accelerating motion having a better operability taking the influence of the gravity into consideration.

In this case, there is shown an example in which each of the threshold values in Figs. 24D, 24E and 24F is specifically set. Since the characteristics of the pedal and the vehicle output are different in accordance with the surrounding environment, and the kind and the intended use of the vehicle, each of the threshold values in Figs. 24D, 24E and 24F is not necessarily limited here. For example, the change rate of the gradient of the pedal reaction force (the pedal effort) may be set to about 0.9 at a time when the gradient is a threshold value 1334, and may be set to about 1.5 at a time when the gradient is a threshold value 1333. In this case, the change rate of the gradient of the vehicle output may be set to about 1.5 at a time of the threshold value 1334, and may be set to about 0.8 at a time when the gradient is the threshold value 1333. In this case, the threshold value 1333 may be set to about -15 degree, and the threshold value may be set to about 15 degree.

Further, for example, a line 1341 may be 10 N at a time when the gradient is 0, may become 20 N in the threshold value 1333, and may become 8 N in the threshold value 1334. For example, the line 1341 may become 0.005 m at a time when the gradient is 0, may become 0.007 m in the threshold value 1333, and may become 0.002 m in the threshold value 1334.

It is possible to use a slip rate between the traveling road and the vehicle as the parameter so as to change the change rates of the gradients of the pedal reaction force (the pedal effort) and the vehicle output, the pedal reaction force (the pedal effort) at a time when the pedal position is 0, and the minimum pedal position generating the vehicle output in correspondence to the slip rate.

In this case, the slip rate may be calculated on the basis of the vehicle speed and the wheel speed detected by the vehicle information detecting means. In the case that the wheel speed is slower than the vehicle speed, the slip rate becomes positive, and can be expressed by the formula (12).

$$\text{Slip rate} = (\text{vehicle body speed} - \text{wheel speed})/\text{vehicle body speed} \qquad (12)$$

Further, in the case that the wheel speed is faster than the vehicle body speed, the slip rate becomes negative, and can be expressed by the formula (13).

$$\text{Slip rate} = (\text{vehicle body speed} - \text{wheel speed})/\text{wheel speed} \qquad (13)$$

The case that the slip rate is positive generally corresponds to a state in which the vehicle and the road surface slip on the basis of the braking operation, and the case that the slip rate is negative corresponds to a state in which the vehicle and the road surface slip on the basis of the accelerating operation.

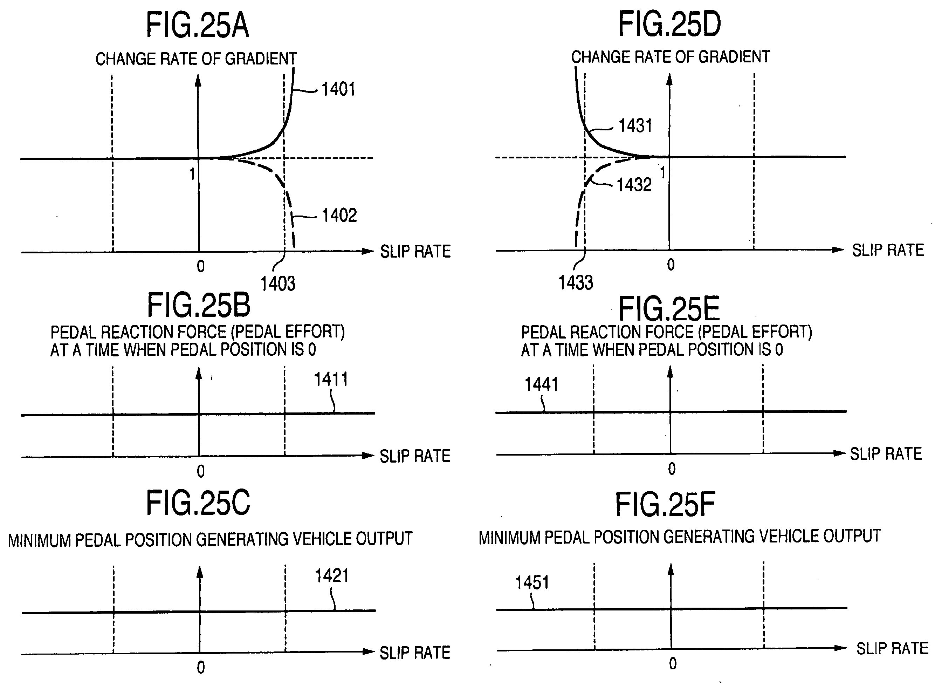

Fig. 25 shows an example of the case that the characteristics of the pedal reaction force (the pedal effort) and the vehicle output are changed in correspondence to the slip rate.

Figs. 25A, 25B and 25C are views showing the brake pedal and the braking output system.

In the case that the slip rate is positive, it can be said that there is generated a condition that the vehicle slips on the road surface, and the braking force does not rightly contribute to the motion of the vehicle. Further, if the braking force is increased more, the slip rate is increased, and there is a possibility that the vehicle slips. Accordingly, it is desirable to suppress the braking force so as to prevent the braking force from becoming larger. For example, the change rate of the gradient of the pedal reaction force (the pedal effort) may be set as shown by reference numeral 1401 such that the slip rate becomes rapidly larger in a region near the threshold value 1403, thereby preventing the pedal from being stepped. Further, it is possible to rapidly reduce the change rate 1402 of the gradient of the vehicle output in the region near the threshold value 1403 so as to prevent the vehicle output from being larger. In this case, the threshold value 1403 may be set, for example, to about 0.05 to 0.2.

Further, the pedal reaction force (the pedal effort) at a time when the pedal position is 0, and the minimum pedal position 1421 generating the vehicle output may not be changed by the slip rate.

Figs. 25D, 25E and 25F are views showing the accelerator pedal and the braking output system.

In the case that the slip rate is negative, it can be said that there is generated a condition that the vehicle slips on the road surface, and the driving force does not rightly contribute to the motion of the vehicle. Further, if the driving force is increased more, the slip rate is reduced, and there is a possibility that the vehicle slips. Accordingly, it is desirable to suppress the driving force so as to prevent the driving force from becoming larger. For example, the change rate of the gradient of the pedal reaction force (the pedal effort) may be set as shown by reference numeral 1431 such that the slip rate becomes rapidly larger in a region near the threshold value 1433, thereby preventing the pedal from being stepped. Further, it is possible to rapidly reduce the change rate 1432 of the gradient of the vehicle output in the region near the threshold value 1433 so as to prevent the vehicle output from being larger. In this case, the threshold value 1433 may be set, for example, to about -0.05 to -0.2.

Further, the pedal reaction force (the pedal effort) at a time when the pedal position is 0, and the minimum pedal position generating the vehicle output may not be changed by the slip rate.

It is possible to inform the driver of that matter that the vehicle output which the vehicle can practically output reaches the limit, by changing the change rate of the gradient in correspondence to the slip rate, as shown in Fig. 25, it is possible to suppress such an operation that the vehicle output is output over the limit, and it is possible to prevent a dangerous motion such as a spin or the like from being generated in the vehicle.

(Embodiment 2)

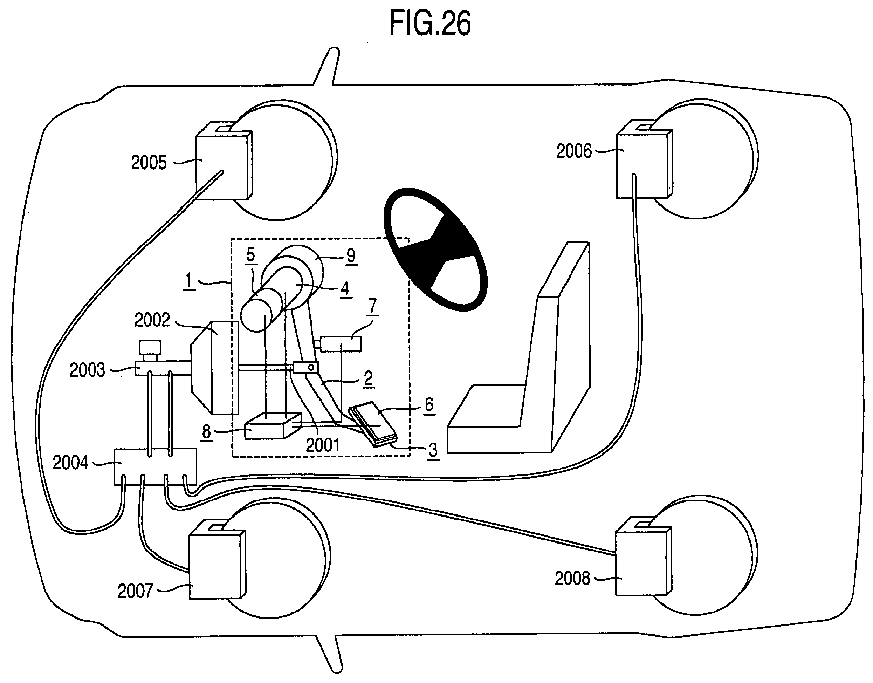

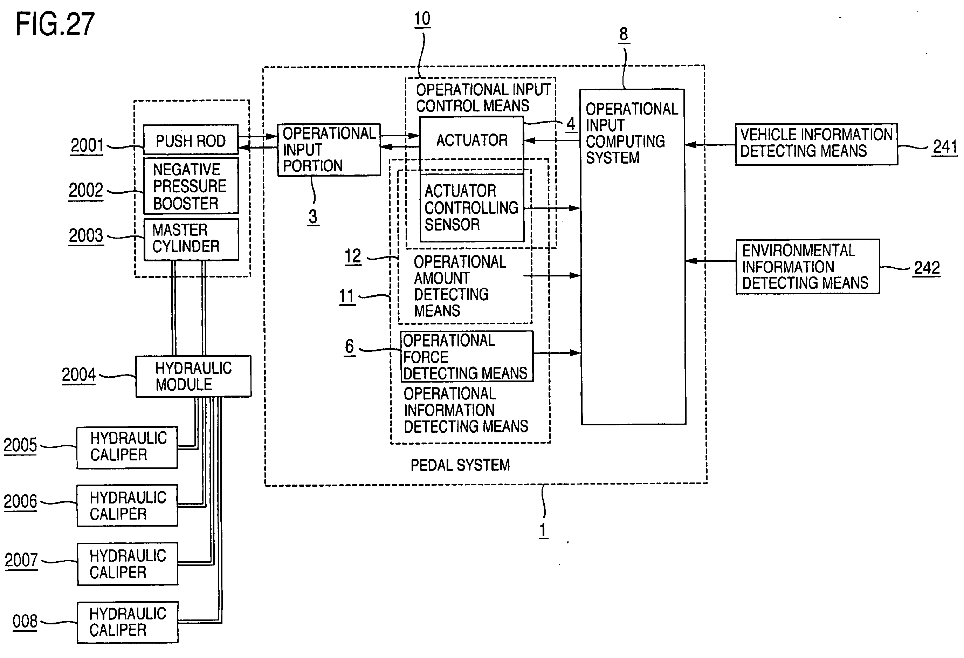

Fig. 26 is a schematic view of a system constituting an embodiment 2. Further, Fig. 27 is a block diagram of a system constituting the present embodiment. It is possible to similarly apply the matters relating to the pedal reaction force in the present invention described in the embodiment 1 to a structure shown in Fig. 26.

Reference numeral 1 denotes a pedal system which the driver operates for driving the vehicle. The pedal system 1 is provided with an actuator 4, and can electrically control the pedal position and the pedal reaction force. Further, the pedal system 1 travels the pedal position in correspondence to the operating force or the pedal effort applied to an operational input portion 3, and generates the pedal reaction force in correspondence to the pedal position. A relation between the pedal position and the pedal reaction force or the pedal effort can be optionally set on the basis of an electrical control.

Further, reference numerals 2005 to 2008 denote a braking output system for braking the vehicle so as to decelerate. Reference numerals 2005 to 2008 denote a hydraulic caliper for pressing the piston to the rotor on the basis of a hydraulic pressure and braking the vehicle by a friction member.

In this case, the pedal system and the braking output system are connected therebetween via a mechanical connection or a hydraulic piping, and an electric signal is not exchanged between the pedal system and the braking output system. The operational input to the pedal system 1 is assisted double by a negative booster 2002 via a push rod 2001, and is converted into a hydraulic pressure by a master cylinder 2003. The hydraulic pressure generated in the master cylinder 2003 reaches a hydraulic module 2004 via a piping, and is distributed by a hydraulic module 2004 so as to be transmitted to the calipers 2005 to 2008.

In the embodiment 2, a relation between the pedal position and the braking force is determined in accordance with a mechanical condition, however, a relation between the pedal position and the pedal reaction force, and the pedal effort and the braking force can be made variable by electrically controlling the pedal system 1.

A basic system of the present invention described in the embodiment 1 does not essentially require the matter that the relation of the braking force with respect to the pedal position is variable. Accordingly, the basic system of the present invention can be applied to the embodiment 2. Therefore, even in the conventional vehicle which does not depends on the by-wire technique, it is possible to apply the basic system of the present invention only by using the pedal system 1, and it is possible to enjoy the main effect.

(Embodiment 3)

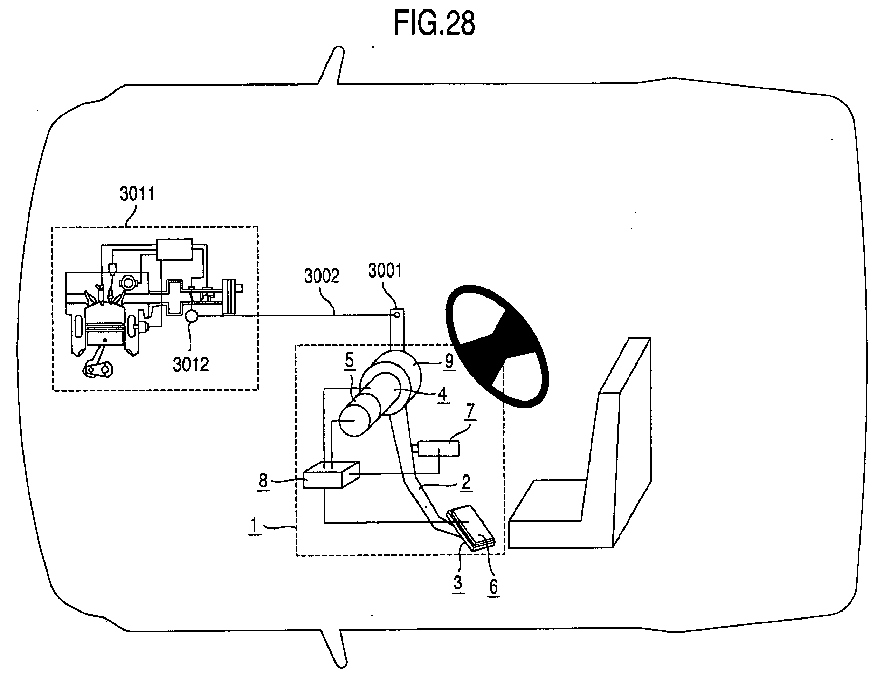

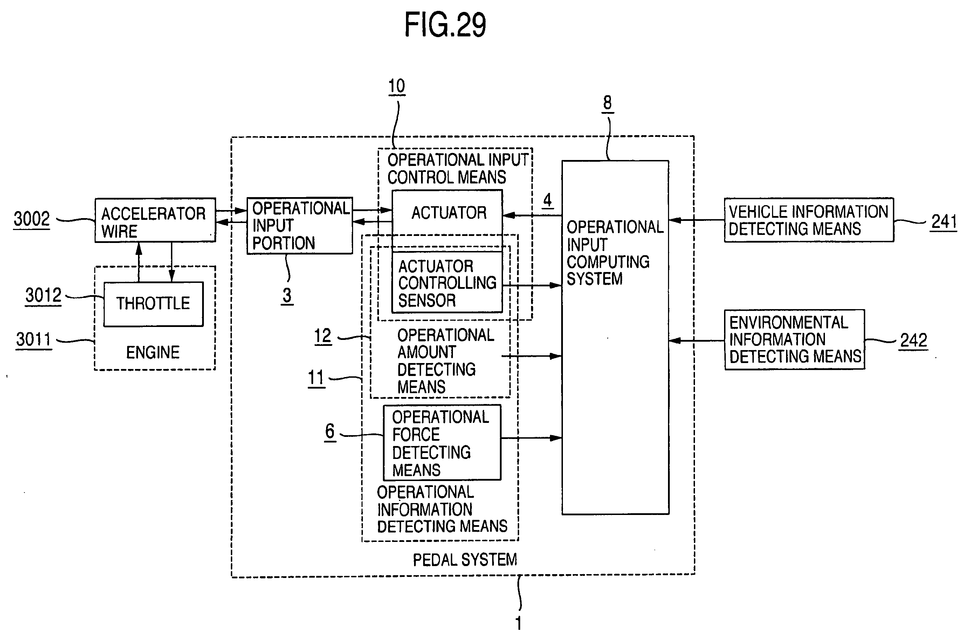

Fig. 28 is a schematic view of a system constituting an embodiment 3. Further, Fig. 29 is a block diagram of a system constituting the present embodiment. It is possible to similarly apply the matters relating to the pedal reaction force in the present invention described in the embodiment 1 to a structure shown in Fig. 28.

Reference numeral 1 denotes a pedal system which the driver operates for driving the vehicle. The pedal system 1 is provided with an actuator 4, and can electrically control the pedal position and the pedal reaction force. Further, the pedal system 1 travels the pedal position in correspondence to the operating force or the pedal effort applied to an operational input portion 3, and generates the pedal reaction force in correspondence to the pedal position. A relation between the pedal position and the pedal reaction force or the pedal effort can be optionally set on the basis of an electrical control.

Further, reference numeral 3011 denotes a driving output system for driving and accelerating the vehicle. Reference numeral 3011 denotes an engine for driving and accelerating the vehicle by using a gasoline or a diesel oil as a fuel. In this case, the pedal system and the driving output system are connected therebetween via a mechanical connection or an accelerator wire, and an electric signal is not exchanged between the pedal system and the driving output system. The operational input to the pedal system operates a throttle opening degree of a throttle 3012 via an accelerator wire 3002 connected to a member 3001, and the engine 3011 drives the vehicle in correspondence to the throttle opening degree of the throttle 3012.

In the embodiment 3, a relation between the pedal position and the driving force is determined in accordance with a mechanical condition, however, a relation between the pedal position and the reaction force, and the pedal effort and the driving force can be made variable by electrically controlling the pedal system.

A basic system of the present invention described in the embodiment 1 does not essentially require the matter that the relation of the braking force with respect to the pedal position is variable. Accordingly, the basic system of the present invention can be applied to the embodiment 3. Therefore, even in the conventional vehicle which does not depend on the by-wire technique, it is possible to apply the basic system of the present invention only by using the pedal system 1, and it is possible to enjoy the main effect.

As described above, in accordance with the present invention, it is possible to provide the pedal system which is easily operated, has a hardness for fatigue and has a good drive feeling, by achieving the characteristics of the pedal and the vehicle motion in correspondence to the operational information, the vehicle information and the environmental information, without applying the uncomfortable feeling to the driver.

**Claims**

1.  A pedal system of a vehicle which is provided with a pedal and an actuator (4), and is capable of electrically controlling a pedal position or a pedal reaction force,
    **characterized in that** a gradient of a pedal reaction force with respect to a pedal position is changed in correspondence to a parameter on the basis of an operational information, a vehicle information and an environmental information, and
    wherein the pedal reaction force is kept constant at a time when the pedal position is not changed in a state in which said pedal is stepped down.

2.  A pedal system of a vehicle according to claim 1, further comprising a vehicle output system (121) outputting a vehicle output.

3.  A pedal system of a vehicle according to claim 2, wherein said vehicle output is kept constant at a time when the pedal position is not changed in a state in which said pedal is stepped down.

4.  A pedal system of a vehicle as claimed in any one of claims 1 to 3, **characterized in that** said parameter is constituted by a vehicle speed.

5.  A pedal system of a vehicle as claimed in any one of claims 1 to 4, **characterized in that** said parameter is constituted by how much the vehicle travels while turning.

6.  A pedal system of a vehicle as claimed in any one of claims 1 to 5, **characterized in that** said parameter is constituted by a velocity for stepping down said pedal.

7.  A pedal system of a vehicle as claimed in any one of claims 1 to 6, **characterized in that** said parameter is constituted by a relative relation with a forward going vehicle or a forward obstacle.

8.  A pedal system of a vehicle as claimed in any one of claims 1 to 7, **characterized in that** said parameter is constituted by a vehicle weight or a load amount.

9.  A pedal system of a vehicle as claimed in any one of claims 1 to 8, **characterized in that** said parameter is constituted by a gradient of a traveling path.

10. A pedal system of a vehicle as claimed in any one of claims 1 to 9, **characterized in that** said parameter is constituted by a slip rate between the vehicle and a traveling path.

11. A pedal system of a vehicle as claimed in any one of claims 1 to 10, **characterized in that** said pedal is constituted by a brake pedal or an accelerator pedal.

12. A vehicle system comprising a pedal system according to one of claims 1 to 11.


**Patentansprüche**

1.  Pedalsystem eines Fahrzeugs, das mit einem Pedal und einem Aktor (4) versehen und dazu imstande ist, eine Pedalposition oder eine Pedalreaktionskraft elektrisch zu steuern,
    **dadurch gekennzeichnet, dass** ein Gradient einer Pedalreaktionskraft in Bezug auf eine Pedalposition in Übereinstimmung mit einem Parameter auf der Basis einer Betriebsinformation, einer Fahrzeuginformation und einer Umgebungsinformation geändert wird, und
    wobei die Pedalreaktionskraft zu einem Zeitpunkt konstant gehalten wird, wenn die Pedalposition in einem Zustand, in dem das Pedal niedergedrückt wird, nicht geändert wird.

2.  Pedalsystem seines Fahrzeugs nach Anspruch 1, ferner mit einem Fahrzeugausgabesystem (121), das eine Fahrzeugausgabe ausgibt.

3.  Pedalsystem eines Fahrzeugs nach Anspruch 2, wobei die Fahrzeugausgabe zu einem Zeitpunkt konstant gehalten wird, wenn die Pedalposition in einem Zustand, in dem das Pedal niedergedrückt wird, nicht geändert wird.

**4.** Pedalsystem eines Fahrzeugs nach irgendeinem der Ansprüche 1 bis 3, **dadurch gekennzeichnet, dass** der Parameter von einer Fahrzeuggeschwindigkeit gebildet wird.

**5.** Pedalsystem eines Fahrzeugs nach irgendeinem der Ansprüche 1 bis 4, **dadurch gekennzeichnet, dass** der Parameter davon gebildet wird, wie viel das Fahrzeug fährt, während es eine Kurve befährt.

**6.** Pedalsystem eines Fahrzeugs nach irgendeinem der Ansprüche 1 bis 5, **dadurch gekennzeichnet, dass** der Parameter von einer Schnelligkeit zum Niederdrücken des Pedals gebildet wird.

**7.** Pedalsystem eines Fahrzeugs nach irgendeinem der Ansprüche 1 bis 6, **dadurch gekennzeichnet, dass** der Parameter von einer relativen Beziehung zu einem vorwärts fahrenden Fahrzeug oder einem Hindernis in Vorwärtsrichtung gebildet wird.

**8.** Pedalsystem eines Fahrzeugs nach irgendeinem der Ansprüche 1 bis 7, **dadurch gekennzeichnet, dass** der Parameter von einem Fahrzeuggewicht oder einer Lastmenge gebildet wird.

**9.** Pedalsystem eines Fahrzeugs nach irgendeinem der Ansprüche 1 bis 8, **dadurch gekennzeichnet, dass** der Parameter von einem Gradienten eines Fahrwegs gebildet wird.

**10.** Pedalsystem eines Fahrzeugs nach irgendeinem der Ansprüche 1 bis 9, **dadurch gekennzeichnet, dass** der Parameter von einer Schlupfrate zwischen dem Fahrzeug und einem Fahrweg gebildet wird.

**11.** Pedalsystem eines Fahrzeugs nach irgendeinem der Ansprüche 1 bis 10, **dadurch gekennzeichnet, dass** das Pedal von einem Bremspedal oder einem Gaspedal gebildet wird.

**12.** Fahrzeugsystem mit einem Pedalsystem nach einem der Ansprüche 1 bis 11.

**Revendications**

**1.** Système de pédale pour un véhicule qui est doté d'une pédale et d'un actionneur (4), et qui est capable de commander électriquement une position de la pédale ou une force de réaction de la pédale,
**caractérisé en ce qu'**un gradient d'une force de réaction de la pédale par rapport à une position de la pédale est changé en correspondance d'un paramètre sur la base d'une information opérationnelle, d'une information sur le véhicule et d'une information environnementale, et
dans lequel la force de réaction de la pédale est maintenue constante à un moment quand la position de la pédale n'est pas changée dans une situation dans laquelle ladite pédale est enfoncée.

**2.** Système de pédale pour un véhicule selon la revendication 1, comprenant en outre un système de sortie véhicule (121) pour faire sortir une sortie véhicule.

**3.** Système de pédale pour un véhicule selon la revendication 2, dans lequel ladite sortie véhicule est maintenue constante à un moment quand la position de la pédale n'est pas changée dans une situation dans laquelle ladite pédale est enfoncée.

**4.** Système de pédale pour un véhicule selon l'une quelconque des revendications 1 à 3, **caractérisé en ce que** ledit paramètre est constitué par une vitesse du véhicule.

**5.** Système de pédale pour un véhicule selon l'une quelconque des revendications 1 à 4, **caractérisé en ce que** ledit paramètre est constitué par la distance parcourue par le véhicule en cours de virage.

**6.** Système de pédale pour un véhicule selon l'une quelconque des revendications 1 à 5, **caractérisé en ce que** ledit paramètre est constitué par une vitesse pour enfoncer ladite pédale.

**7.** Système de pédale pour un véhicule selon l'une quelconque des revendications 1 à 6, **caractérisé en ce que** ledit paramètre est constitué par une relation relative avec un véhicule qui circule en avant ou un obstacle en avant.

**8.** Système de pédale pour un véhicule selon l'une quelconque des revendications 1 à 7, **caractérisé en ce que** ledit paramètre est constitué par un poids du véhicule ou par une quantité chargée.

9. Système de pédale pour un véhicule selon l'une quelconque des revendications 1 à 8, **caractérisé en ce que** ledit paramètre est constitué par un gradient d'un trajet de déplacement.

10. Système de pédale pour un véhicule selon l'une quelconque des revendications 1 à 9, **caractérisé en ce que** ledit paramètre est constitué par un taux de glissement entre le véhicule et un trajet de déplacement.

11. Système de pédale pour un véhicule selon l'une quelconque des revendications 1 à 10, **caractérisé en ce que** ladite pédale est constituée par une pédale de frein ou par une pédale d'accélérateur.

12. Système véhiculaire comprenant un système de pédale selon l'une des revendications 1 à 11.

# FIG.1

EP 1 707 462 B1

# FIG.2

BRAKING OUTPUT SYSTEM

DRIVING OUTPUT SYSTEM

DRIVING OUTPUT SYSTEM

VEHICLE OUTPUT SYSTEM

PEDAL SYSTEM

EP 1 707 462 B1

# FIG.3A

OPERATIONAL INPUT
COMPUTING SYSTEM

8

111 — COMMUNI-CATION PATH

150

VEHICLE OUTPUT
COMPUTING
SYSTEM

151   152   153   154

# FIG.3B

OPERATIONAL INPUT
COMPUTING SYSTEM

8

111 — COMMUNI-CATION PATH

111 — COMMUNI-CATION PATH

155 — VEHICLE OUTPUT
COMPUTING
SYSTEM

158 — VEHICLE OUTPUT
COMPUTING
SYSTEM

156   157   159   160

# FIG.3C

OPERATIONAL INPUT
COMPUTING SYSTEM

8

111 — COMMUNI-CATION PATH

161   162   163   164

VEHICLE
OUTPUT
COMPUTING
SYSTEM

VEHICLE
OUTPUT
COMPUTING
SYSTEM

VEHICLE
OUTPUT
COMPUTING
SYSTEM

VEHICLE
OUTPUT
COMPUTING
SYSTEM

165   166   167   168

# FIG.3D

OPERATIONAL INPUT
COMPUTING SYSTEM

8

111 — COMMUNI-CATION PATH

111 — COMMUNI-CATION PATH

169   170   171   172

VEHICLE
OUTPUT
COMPUTING
SYSTEM

VEHICLE
OUTPUT
COMPUTING
SYSTEM

VEHICLE
OUTPUT
COMPUTING
SYSTEM

VEHICLE
OUTPUT
COMPUTING
SYSTEM

173   174   175   176

EP 1 707 462 B1

FIG.4B

FIG.4A

# FIG.5

# FIG.6

EP 1 707 462 B1

FIG.7A

FIG.7B

32

# FIG.9A

PEDAL REACTION FORCE

452

451

PEDAL POSITION

# FIG.9B

VISCOUS REACTION FORCE

453

PEDAL VELOCITY

# FIG.9C

PEDAL VELOCITY

454

PEDAL POSITION

# FIG.9D

VISCOUS REACTION FORCE

455

PEDAL POSITION

EP 1 707 462 B1

# FIG.10A

VEHICLE OUTPUT

461

PEDAL POSITION

# FIG.10B

VEHICLE OUTPUT

462

PEDAL EFFORT

EP 1 707 462 B1

# FIG.11

# FIG.12A

PEDAL REACTION FORCE
(PEDAL EFFORT)

511
513
515
514
512

PEDAL POSITION

# FIG.12B

PEDAL REACTION FORCE
(PEDAL EFFORT)

526
525
522
524
523
521

PEDAL POSITION

# FIG.12C

GRADIENT

533
532
531
534
535
536

PEDAL POSITION

# FIG.12D

CHANGE RATE OF GRADIENT

542
541

1

PARAMETER

# FIG.13A

PEDAL REACTION FORCE
(PEDAL EFFORT)

556

551

557

554

552

553

555 PEDAL POSITION

# FIG.13B

PEDAL REACTION FORCE
(PEDAL EFFORT)

564

565

554

563

551

562 TIME

## FIG.13C

PEDAL POSITION

575

551

574

555

571

572

562 TIME

## FIG.13D

VEHICLE SPEED

583

581

582

562 TIME

EP 1 707 462 B1

# FIG.14

FIG.15A

FIG.15B

FIG.15C

FIG.15D

# FIG.16A

VEHICLE OUTPUT

656

651

657

654

653

652

655

PEDAL POSITION

# FIG.16B

VEHICLE OUTPUT

666

651

665

654  663

664

662

TIME

# FIG.16C

PEDAL POSITION

665

651

673

655  671

662

TIME

# FIG.16D

VEHICLE SPEED

683

681

682

562

TIME

EP 1 707 462 B1

## FIG.17A

PEDAL REACTION FORCE
(PEDAL EFFORT)

701
702
703
705
704
706

PEDAL POSITION

## FIG.17B

VEHICLE OUTPUT

711
713
712
716  714  715

PEDAL POSITION

## FIG.17C

VEHICLE OUTPUT

722
721
723
726 724 725

PEDAL EFFORT

## FIG.17D

VEHICLE OUTPUT

732
731
733
736 734 735

PEDAL EFFORT

EP 1 707 462 B1

# FIG.18A

PEDAL REACTION FORCE
(PEDAL EFFORT)

752
754
755
751
753

PEDAL POSITION

# FIG.18B

VEHICLE OUTPUT

765
761
762
764
763

PEDAL POSITION

# FIG.18C

VEHICLE OUTPUT

772
772
771
774
773

PEDAL REACTION FORCE
(PEDAL EFFORT)

EP 1 707 462 B1

## FIG.19A

CHANGE RATE OF GRADIENT

801

802

803

VEHICLE SPEED

1

0

## FIG.19B

PEDAL REACTION FORCE (PEDAL EFFORT)
AT A TIME WHEN PEDAL POSITION IS 0

811

803

VEHICLE SPEED

0

## FIG.19C

MINIMUM PEDAL POSITION
GENERATING VEHICLE OUTPUT

821

803

VEHICLE SPEED

0

# FIG.20A

CHANGE RATE OF GRADIENT

901

902

1

0

903

CURVE STATE

# FIG.20B

PEDAL REACTION FORCE (PEDAL EFFORT)
AT A TIME WHEN PEDAL POSITION IS 0

911

0

903

CURVE STATE

# FIG.20C

MINIMUM PEDAL POSITION
GENERATING VEHICLE OUTPUT

921

0

903

CURVE STATE

# FIG.21A

CHANGE RATE OF GRADIENT

1001

1002

1004 1003

PEDAL VELOCITY

0

1

# FIG.21B

PEDAL REACTION FORCE (PEDAL EFFORT)
AT A TIME WHEN PEDAL POSITION IS 0

1011

0

1003

PEDAL VELOCITY

# FIG.21C

MINIMUM PEDAL POSITION
GENERATING VEHICLE OUTPUT

1021

0

1003

PEDAL VELOCITY

# FIG.21D

CHANGE RATE OF GRADIENT

1031

1032

0

1033

PEDAL VELOCITY

1

# FIG.21E

PEDAL REACTION FORCE (PEDAL EFFORT)
AT A TIME WHEN PEDAL POSITION IS 0

1041

0

1033

PEDAL VELOCITY

# FIG.21F

MINIMUM PEDAL POSITION
GENERATING VEHICLE OUTPUT

1051

1035

1033

PEDAL VELOCITY

EP 1 707 462 B1

## FIG.22A

CHANGE RATE OF GRADIENT

1102

1

1101

RELATIVE DISTANCE
COLLISION TIME

1105  1104  1103

## FIG.22B

PEDAL REACTION FORCE (PEDAL EFFORT)
AT A TIME WHEN PEDAL POSITION IS 0

1111

RELATIVE DISTANCE
COLLISION TIME

1105  1103

## FIG.22C

MINIMUM PEDAL POSITION
GENERATING VEHICLE OUTPUT

1121

RELATIVE DISTANCE
COLLISION TIME

1105  1103

## FIG.22D

CHANGE RATE OF GRADIENT

1131

1

1132

RELATIVE DISTANCE
COLLISION TIME

1135  1133

## FIG.22E

PEDAL REACTION FORCE (PEDAL EFFORT)
AT A TIME WHEN PEDAL POSITION IS 0

1141

RELATIVE DISTANCE
COLLISION TIME

1135  1133

## FIG.22F

MINIMUM PEDAL POSITION
GENERATING VEHICLE OUTPUT

1151

RELATIVE DISTANCE
COLLISION TIME

1135  1133

EP 1 707 462 B1

## FIG.23A
CHANGE RATE OF GRADIENT

1202

1201

VEHICLE WEIGHT
LOAD AMOUNT

1203

## FIG.23B
PEDAL REACTION FORCE (PEDAL EFFORT)
AT A TIME WHEN PEDAL POSITION IS 0

1211

VEHICLE WEIGHT
LOAD AMOUNT

1203

## FIG.23C
MINIMUM PEDAL POSITION
GENERATING VEHICLE OUTPUT

1221

VEHICLE WEIGHT
LOAD AMOUNT

1203

## FIG.23D
CHANGE RATE OF GRADIENT

1232

1231

VEHICLE WEIGHT
LOAD AMOUNT

1233

## FIG.23E
PEDAL REACTION FORCE (PEDAL EFFORT)
AT A TIME WHEN PEDAL POSITION IS 0

1241

VEHICLE WEIGHT
LOAD AMOUNT

1233

## FIG.23F
MINIMUM PEDAL POSITION
GENERATING VEHICLE OUTPUT

1251

VEHICLE WEIGHT
LOAD AMOUNT

1233

## FIG.24A
### CHANGE RATE OF GRADIENT

## FIG.24D
### CHANGE RATE OF GRADIENT

## FIG.24B
### PEDAL REACTION FORCE (PEDAL EFFORT) AT A TIME WHEN PEDAL POSITION IS 0

## FIG.24E
### PEDAL REACTION FORCE (PEDAL EFFORT) AT A TIME WHEN PEDAL POSITION IS 0

## FIG.24C
### MINIMUM PEDAL POSITION GENERATING VEHICLE OUTPUT

## FIG.24F
### MINIMUM PEDAL POSITION GENERATING VEHICLE OUTPUT

EP 1 707 462 B1

# FIG.25A

CHANGE RATE OF GRADIENT

1401

1

1402

1403

SLIP RATE

0

# FIG.25B

PEDAL REACTION FORCE (PEDAL EFFORT)
AT A TIME WHEN PEDAL POSITION IS 0

1411

SLIP RATE

0

# FIG.25C

MINIMUM PEDAL POSITION GENERATING VEHICLE OUTPUT

1421

SLIP RATE

0

# FIG.25D

CHANGE RATE OF GRADIENT

1431

1432  1

1433

SLIP RATE

0

# FIG.25E

PEDAL REACTION FORCE (PEDAL EFFORT)
AT A TIME WHEN PEDAL POSITION IS 0

1441

SLIP RATE

0

# FIG.25F

MINIMUM PEDAL POSITION GENERATING VEHICLE OUTPUT

1451

SLIP RATE

0

EP 1 707 462 B1

FIG.26

EP 1 707 462 B1

# FIG.27

PUSH ROD  2001

NEGATIVE PRESSURE BOOSTER  2002

MASTER CYLINDER  2003

HYDRAULIC MODULE  2004

HYDRAULIC CALIPER  2005

HYDRAULIC CALIPER  2006

HYDRAULIC CALIPER  2007

HYDRAULIC CALIPER  008

OPERATIONAL INPUT PORTION  3

OPERATIONAL INPUT CONTROL MEANS  10

ACTUATOR  4

ACTUATOR CONTROLLING SENSOR  12

OPERATIONAL AMOUNT DETECTING MEANS  11

OPERATIONAL FORCE DETECTING MEANS  6

OPERATIONAL INFORMATION DETECTING MEANS

PEDAL SYSTEM

OPERATIONAL INPUT COMPUTING SYSTEM  8

VEHICLE INFORMATION DETECTING MEANS  241

ENVIRONMENTAL INFORMATION DETECTING MEANS  242

1

EP 1 707 462 B1

FIG.28

# FIG.29

EP 1 707 462 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001278020 A

- US 2004080405 A1